# EUROPEAN PATENT SPECIFICATION

(11) **EP 4 394 572 B1**
(45) Date of publication and mention of the grant of the patent: **09.09.2026**
(21) Application number: 23829778.2
(22) Date of filing: 17.05.2023
(51) Int. Cl.: G06F 3/0481, G06F 3/04817, G06F 3/0484, G06F 3/0486, G06F 3/04845, G06F 3/0488, G06F 3/04883

(54) **INTERFACE DISPLAY METHOD AND APPARATUS**
SCHNITTSTELLENANZEIGEVERFAHREN UND -VORRICHTUNG
PROCÉDÉ ET APPAREIL D'AFFICHAGE D'INTERFACE

(30) Priority: 30.06.2022 CN 202210764666
(43) Date of publication of application: 03.07.2024
(73) Proprietor: Honor Device Co., Ltd., Shenzhen, Guangdong 518040 (CN)
(72) Inventor: XIONG, Mian, Shenzhen, Guangdong 518040 (CN); YOU, Yongxian, Shenzhen, Guangdong 518040 (CN); YANG, Hua, Shenzhen, Guangdong 518040 (CN)
(74) Representative: Gill Jennings & Every LLP
(86) International application number: PCT/CN2023/094895
(87) International publication number: WO 2024/001592

(56) References cited:
- WO-A1-2021/183690
- CN-A- 106 802 751
- CN-A- 113 568 549
- CN-A- 115 904 160
- CN-A- 116 048 361
- JP-A- 2011 018 356
- JP-A- 2016 057 747

## Description

This application claims priority to Chinese Patent Application No. 202210764666.9, filed with the China National Intellectual Property Administration on June 30, 2022 and entitled "INTERFACE DISPLAY METHOD AND APPARATUS".

### TECHNICAL FIELD

This application relates to the field of terminal technologies, and in particular, to an interface display method and apparatus.

### BACKGROUND

With the popularity and development of the Internet, to meet requirements of different users for using a terminal device, increasingly more elements may be displayed on a home screen of the terminal device. Generally, the user may drag or move any element on the home screen to another location on the home screen by triggering the element.

However, when the user accidentally touches any element in the interface, the terminal device may quickly drag or move the element in response to an accidental touch operation of the user, and consequently, the user may be unable to notice, in a timely manner, the element that is moved during the accidental touch.

CN113568549A discloses a graphical interface display method, electronic equipment, a storage medium and a program product. In the method, the electronic device displays M user interface (UI) elements on a screen. The electronic device detects an operation acting on the first UI element. In response to the operation, the electronic device causes each UI element of the N UI elements on the screen to generate an animation effect that is subject to "attractive" or "repulsive". While producing the animation effect, the electronic device determines a target distance by which the second UI element will move in the first direction. The electronic device causes a first movement of the second UI element from the starting position in the first direction by a target distance. After the first movement, the electronic device causes a second movement of the second UI element in a second direction opposite the first direction to reset to the starting position. Therefore, the dynamic effect conforming to the natural law is shown, the dynamic effect is more consistent with the life experience of the user, and the vitality and the humanization degree of the electronic equipment are enhanced.

### SUMMARY

Embodiments of this application provide an interface display method and apparatus. When detecting that a target element is placed at a target location, a terminal device may produce a ripple effect around the target element, so that a user can notice, in a timely manner, the target element that may be moved.

According to a first aspect, an embodiment of this application provides an interface display method, and the method includes: A terminal device displays a first interface, where the first interface includes a plurality of elements; the terminal device receives a first operation for a target element in the plurality of elements; the terminal device moves the target element from a first location to a second location in response to the first operation; and the terminal device scales down and/or scales up a first layer of elements around the second location in the plurality of elements for display. In this way, when detecting that the target element is placed at a target location, the terminal device may produce a ripple effect around the target element, so that a user can notice, in a timely manner, the target element that may be moved.

The first location may be a start location of the target element, and the second location may be a location at which ripples are produced for the target element, or may be understood as the target location described in this embodiment of this application. The first location may be the same as or different from the second location. The first operation may be a target operation described in embodiments of this application.

In the first aspect, the method further includes: The terminal device scales down and/or scales up a second layer of elements around the second location in the plurality of elements for display. Optionally, the second layer of elements and the first layer of elements are all elements centered on the second location, and the second layer of elements are elements on an outer side of the first layer of elements. In this way, the terminal device may form a ripple effect with two layers of ripples around the target element based on fluctuation of the first layer of elements and the second layer of elements, so that the user can notice, in a timely manner, the target element that may be moved.

The first layer of elements may be elements corresponding to a first range described in embodiments of this application, and the second layer of elements may be elements corresponding to a second range described in embodiments of this application.

In the first aspect, that the terminal device scales down and/or scales up a second layer of elements around the second location in the plurality of elements for display includes: The terminal device scales down and/or scales up the second layer of elements for display after a first time threshold after the terminal device scales down and/or scales up the first layer of elements for display. In this way, the terminal device may fluctuate the second layer of elements after a time period threshold after fluctuation of the first layer of elements, and form a water ripple-like effect by using a time difference of fluctuation of the two layers of elements, so that a ripple effect is more vivid.

A value of the first time threshold may be 50 ms or another value.

In the first aspect, a scaling down proportion to which the second layer of elements are scaled down for display is greater than a scaling down proportion to which the first layer of elements are scaled down for display, and a scaling up proportion to which the second layer of elements are scaled up for display is less than a scaling up proportion to which the first layer of elements are scaled up for display. In this way, the terminal device may adjust scaling proportions of different layers of elements to present a dynamic effect in which waveforms successively attenuate, so that a ripple effect is more vivid.

In a possible implementation, the method further includes: The terminal device scales down and/or scales up an N^{th} layer of elements around the second location in the plurality of elements for display, where the N^{th} layer of elements and the second layer of elements are all elements centered on the second location, the N^{th} layer of elements are elements on an outer side of the second layer of elements, and N is greater than 2. In this way, the terminal device may form, based on N layers of elements, a ripple effect with N layers of ripples around the target element, so that the user can notice, in a timely manner, the target element that may be moved.

In a possible implementation, the method further includes: When an M^{th} layer of elements include an element in a dock bar, the terminal device scales down and/or scales up the element in the dock bar for display, where M is less than or equal to N. In this way, when the M^{th} layer of elements include the element in the dock bar, the terminal device can also scale the element in the dock bar for display, so that a ripple effect can also be presented for the element in the dock bar.

In a possible implementation, a scaling down proportion to which the N^{th} layer of elements are scaled down for display is greater than a scaling down proportion to which the second layer of elements are scaled down for display, and a scaling up proportion to which the N^{th} layer of elements are scaled up for display is less than a scaling up proportion to which the second layer of elements are scaled up for display. In this way, the terminal device may adjust scaling proportions of different layers of elements to present a dynamic effect in which waveforms successively attenuate, so that a ripple effect is more vivid.

In a possible implementation, that the terminal device scales down and/or scales up a first layer of elements around the second location in the plurality of elements for display includes: The terminal device scales down the first layer of elements at a first moment, and displays the scaled-down first layer of elements; the terminal device scales up the scaled-down first layer of elements at a second moment, and displays the scaled-up first layer of elements; and the terminal device scales down the scaled-up first layer of elements at a third moment, and displays the first layer of elements. In this way, the terminal device may scale the first layer of elements by zooming out an image first and then zooming in the image and then zooming out the image, so that a dynamic effect is presented for the first layer of elements.

In a possible implementation, a size of the scaled-down first layer of elements is less than a size of the first layer of elements, and a size of the scaled-up first layer of elements is greater than the size of the first layer of elements.

In a possible implementation, that the terminal device scales down and/or scales up a first layer of elements around the second location in the plurality of elements for display includes: The terminal device inwardly scales down and/or outwardly scales up the first layer of elements around the second location in the plurality of elements for display by using the second location as a center. In this way, the first layer of elements may present a dynamic effect of fluctuating outwardly by using the target element at the second location as a center.

In a possible implementation, that the terminal device moves the target element from a first location to a second location in response to the first operation includes: In response to the first operation, the terminal device scales down the target element, and displays the scaled-down target element; if the first operation continuously acts on the target element, the terminal device scales up the scaled-down target element, and displays the scaled-up target element; and the terminal device moves the scaled-up target element from the first location to the second location. In this way, when receiving a first device used by the user to trigger the target element, the terminal device may scale down and scale up the target element, so that the user can notice the triggered target element.

In a possible implementation, that the terminal device moves the scaled-up target element from the first location to the second location includes: When it is determined that there is a first element at the second location in a process in which the terminal device moves the scaled-up target element from the first location to the second location, the terminal device moves the first element to a third location, and moves the scaled-up target element from the first location to the second location. In this way, when determining there is an element at the second location, the terminal device may move the element to another location, and trigger a ripple effect when the target element is moved to the second location.

In a possible implementation, a size of the target element is positively correlated with a quantity of layers around the second location in the plurality of elements. In this way, a larger size of the target element leads to more ripples presented by the terminal device, so that a dynamic effect that when objects of different sizes are thrown into water, a larger area and larger mass of an object lead to a larger range of formed ripples and larger amplitude of waveforms is simulated.

In a possible implementation, the size of the target element is positively correlated with a range covered by the first layer. In this way, a larger size of the target element leads to larger ripples presented by the terminal device, so that an effect that when objects of different sizes are thrown into water, a larger area and larger mass of an object lead to a larger range of formed waveforms is simulated.

In a possible implementation, the target element is an element in a folder, and the method further includes: The terminal device receives a second operation for the folder. That a terminal device displays a first interface includes: The terminal device displays the first interface in response to the second operation. In this way, when there are a plurality of elements in the folder, the terminal device may present a ripple effect in the folder based on triggering of the target element in the folder.

In a possible implementation, the target element includes an application icon, a card, a widget, a folder, a card set, an image icon, or an album icon.

According to a second aspect, an embodiment of this application provides a terminal device as set out in claim 13.

According to a third aspect, an embodiment of this application provides a computer-readable storage medium as set outin claim 14.

It should be understood that the technical solutions of the second aspect to the fifth aspect of this application correspond to the technical solutions of the first aspect of this application, and beneficial effects achieved by the aspects and corresponding feasible implementations are similar. Details are not described herein again.

### BRIEF DESCRIPTION OF DRAWINGS

FIG. 1 is a schematic diagram of a hardware structure of a terminal device according to an embodiment of this application;
FIG. 2 is a schematic diagram of a software structure of a terminal device according to an embodiment of this application;
FIG. 3A to FIG. 3E are a schematic diagram of an interface in which a ripple effect is triggered according to an embodiment of this application;
FIG. 4A to FIG. 4F are a schematic diagram of another interface in which a ripple effect is triggered according to an embodiment of this application;
FIG. 5A to FIG. 5D are a schematic diagram of an interface in which a ripple effect is triggered in a folder according to an embodiment of this application;
FIG. 6A to FIG. 6D are a schematic diagram of an interface of a ripple effect according to an embodiment of this application;
FIG. 7A to FIG. 7F are a schematic diagram of another interface of a ripple effect according to an embodiment of this application;
FIG. 8A to FIG. 8C are a schematic diagram of still another interface in which a ripple effect is triggered according to an embodiment of this application;
FIG. 9A to FIG. 9F are a schematic diagram of an interface in which a ripple effect is triggered based on an album icon according to an embodiment of this application;
FIG. 10A to FIG. 10C are a schematic diagram of yet another interface in which a ripple effect is triggered according to an embodiment of this application;
FIG. 11A to FIG. 11F are a schematic diagram of another interface in which a ripple effect is triggered based on an album icon according to an embodiment of this application;
FIG. 12 is a schematic diagram of a structure of an interface display apparatus according to an embodiment of this application; and
FIG. 13 is a schematic diagram of another hardware structure of a terminal device according to an embodiment of this application.

### DESCRIPTION OF EMBODIMENTS

To clearly describe technical solutions in embodiments of this application, in embodiments of this application, words such as "first" and "second" are used to distinguish between same items or similar items with basically the same functions and effects. For example, a first value and a second value are merely intended to distinguish between different values, but not to limit a sequential order thereof. A person skilled in the art may understand that the words such as "first" and "second" do not limit a quantity and an execution sequence, and the words such as "first" and "second" do not indicate a definite difference.

It should be noted that, in this application, a word such as "example" or "for example" is used to represent an example, an illustration, or a description. Any embodiment or design solution described as "example" or "for example" in this application should not be construed as being preferred or advantageous over other embodiments or design solutions. Specifically, the words such as "example" or "for example" are used to present related concepts in a specific manner.

In this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually represents an "or" relationship between associated objects. "At least one of the following items" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

It may be understood that when a user accidentally touches any element in an interface, any element in the home screen may move due to the accidental touch of the user. In this case, even if the user notices that the user may have touched the terminal device and check the terminal device, the terminal device quickly moves the element and then displays a home screen in a static state when responding to an accidental touch operation of the user, and this makes it difficult for the user to notice an accidentally touched element.

In view of this, an embodiment of this application provides an interface display method. A terminal device displays a first interface, where the first interface includes a plurality of elements; the terminal device receives a first operation for a target element in the plurality of elements; the terminal device moves the target element from a first location to a second location in response to the first operation; and the terminal device scales down and/or scales up a first layer of elements around the second location in the plurality of elements for display. When receiving a first operation of accidental touch for the target element, the terminal device can scale the first layer of elements around the target element, thereby presenting a ripple effect, so that the user can notice the accidentally touched target element in a timely manner.

The target element may include an application icon, a card, a widget, a folder, a card set, an image icon, an album icon, and the like. Any element in the plurality of elements may also include an application icon, a card, a widget, a folder, a card set, an image icon, an album icon, or the like. This is not limited in this embodiment of this application.

It may be understood that the terminal device may also be referred to as a terminal (terminal), user equipment (user equipment, UE), a mobile station (mobile station, MS), a mobile terminal (mobile terminal, MT), and the like. The terminal device may be a mobile phone (mobile phone) with a touchscreen, a smart TV, a wearable device, a tablet computer (Pad), a computer with a wireless sending/receiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

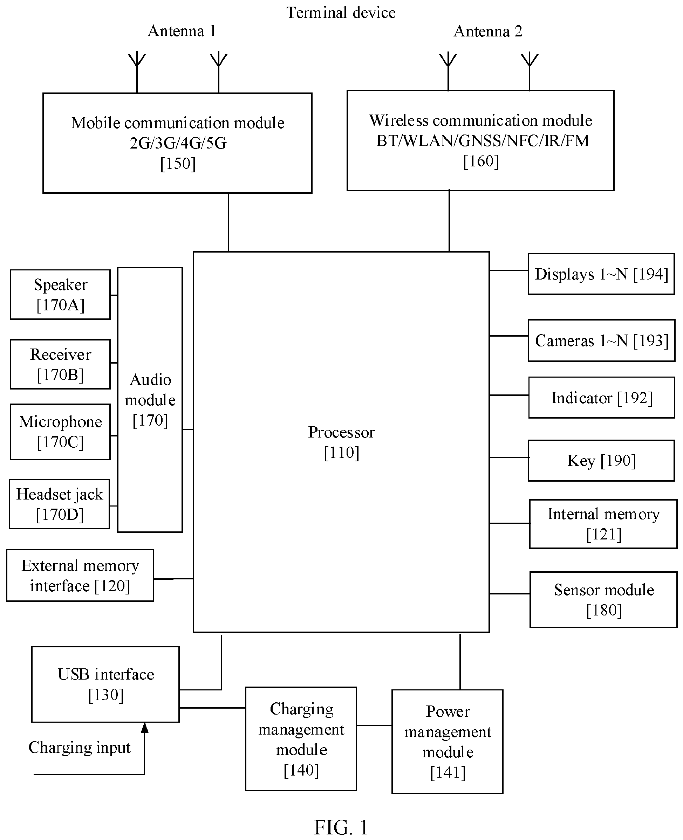

Therefore, for better understanding of embodiments of this application, a structure of the terminal device in embodiments of this application is described below. For example, FIG. 1 is a schematic diagram of a hardware structure of a terminal device according to an embodiment of this application.

The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a key 190, an indicator 192, a camera 193, a display 194, and the like.

It may be understood that the structure illustrated in this embodiment of this application does not constitute a specific limitation on the terminal device. In some other embodiments of this application, the terminal device may include more or fewer components than those shown in the figure, or combine some components, or split some components, or have different component arrangements. The components shown in the figure may be implemented by using hardware, software, or a combination of software and hardware.

The processor 110 may include one or more processing units. Different processing units may be independent components, or may be integrated into one or more processors. A memory may be further disposed in the processor 110, and is configured to store instructions and data.

The USB interface 130 is an interface that complies with USB standard specifications, and may be specifically a Mini USB interface, a Micro USB interface, a USB Type C interface, or the like. The USB interface 130 may be configured to connect to a charger to charge the terminal device, or may be configured to transmit data between the terminal device and a peripheral device, or may be configured to connect to a headset to play audio by using the headset. The interface may be alternatively configured to connect to another terminal device, such as an AR device.

The charging management module 140 is configured to receive a charging input from a charger. The charger may be a wireless charger or a wired charger. The power management module 141 is configured to connect to the charging management module 140 and the processor 110.

A wireless communication function of the terminal device may be implemented by using the antenna 1, the antenna 2, the mobile communication module 150, the wireless communication module 160, a modem processor, a baseband processor, and the like.

The antenna 1 and the antenna 2 are configured to transmit and receive electromagnetic wave signals. The antenna in the terminal device may be configured to cover one or more communication bands. Different antennas may be further multiplexed to improve antenna utilization.

The mobile communication module 150 may provide a wireless communication solution that is applied to the terminal device, including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation.

The wireless communication module 160 may provide a solution that is applied to the terminal device and that includes wireless communication such as a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), or frequency modulation (frequency modulation, FM).

The terminal device implements a display function by using the GPU, the display 194, an application processor, and the like. The GPU is a microprocessor for image processing and is connected to the display 194 and the application processor. The GPU is configured to perform mathematical and geometric computing for graphics rendering.

The display 194 is configured to display an image, a video, and the like. The display 194 includes a display panel. In some embodiments, the terminal device may include one or N displays 194, where N is a positive integer greater than 1.

In a possible implementation, when the terminal device is a device with a touch control function, the display 194 and a touchscreen may be combined. When a user triggers a corresponding location on the display 194, it is equivalent to that the user triggers a corresponding location on the touchscreen.

The triggering may include a tap operation, a touch and hold operation, and the like. The tap operation may be an operation of pressing a corresponding location on the display 194 and lifting a finger within a preset time threshold, and the touch and hold operation may be an operation of pressing a corresponding location on the display 194 and lifting a finger after continuously pressing the location for more than a preset time threshold. It may be understood that both the tap operation and the touch and hold operation described in this embodiment of this application may be applied to the terminal device on which the display 194 is combined with the touchscreen. Details are not described in the following descriptions.

In a possible implementation, the display 194 may not be combined with the touchscreen. In this case, both the tap operation and the touch and hold operation in this embodiment of this application may be replaced with other operations. This is not limited in this embodiment of this application.

The terminal device may implement a shooting function by using an ISP, the camera 193, a video codec, the GPU, the display 194, the application processor, and the like.

The camera 193 is configured to capture a still image or a video. In some embodiments, the terminal device may include one or N cameras 193, where N is a positive integer greater than 1.

The external memory interface 120 may be configured to connect to an external memory card such as a Micro SD card, to expand a storage capability of the terminal device. The external memory card communicates with the processor 110 by using the external memory interface 120, to implement a data storage function, for example, to store files such as music and a video in the external memory card.

The internal memory 121 may be configured to store computer-executable program code, and the executable program code includes instructions. The internal memory 121 may include a program storage area and a data storage area. The internal memory 121 is configured to store executable program code corresponding to the interface display method described in embodiments of this application, and further, the processor 110 executes and invokes the executable program code.

The terminal device may implement an audio function, for example, music playback and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The terminal device may listen to music or answer a call in a hands-free mode by using the speaker 170A. The receiver 170B, also referred to as an "earpiece", is configured to convert an audio electrical signal into a sound signal. When the terminal device receives a call or a voice message, the receiver 170B can be placed close to an ear to receive the voice. The headset jack 170D is configured to connect to a wired headset.

The microphone 170C, also referred to as a "mic" or "mike", is configured to convert a sound signal into an electrical signal. In this embodiment of this application, the terminal device may receive, based on the microphone 170C, a sound signal for waking up the terminal device, and convert the sound signal into an electrical signal, for example, voiceprint data described in embodiments of this application, for subsequent processing. The terminal device may have at least one microphone 170C.

The sensor module 180 may include the following one or more sensors, such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, or a bone conduction sensor (not shown in FIG. 1).

The key 190 includes a power on key, a volume key, and the like. The key 190 may be a mechanical key, or may be a touch key. The terminal device may receive a key input and generate a key signal input related to user settings and function control of the terminal device. The indicator 192 may be an indicator light, may be configured to indicate a charging status or a power change, and may be further configured to indicate a message, a missed incoming call, a notification, and the like.

A software system of the terminal device may use a layered architecture, an eventdriven architecture, a microkernel architecture, a microservice architecture, a cloud architecture, or the like. Details are not described herein.

In this embodiment of this application, an Android (android) system with a layered architecture is used as an example to describe a software structure of the terminal device.

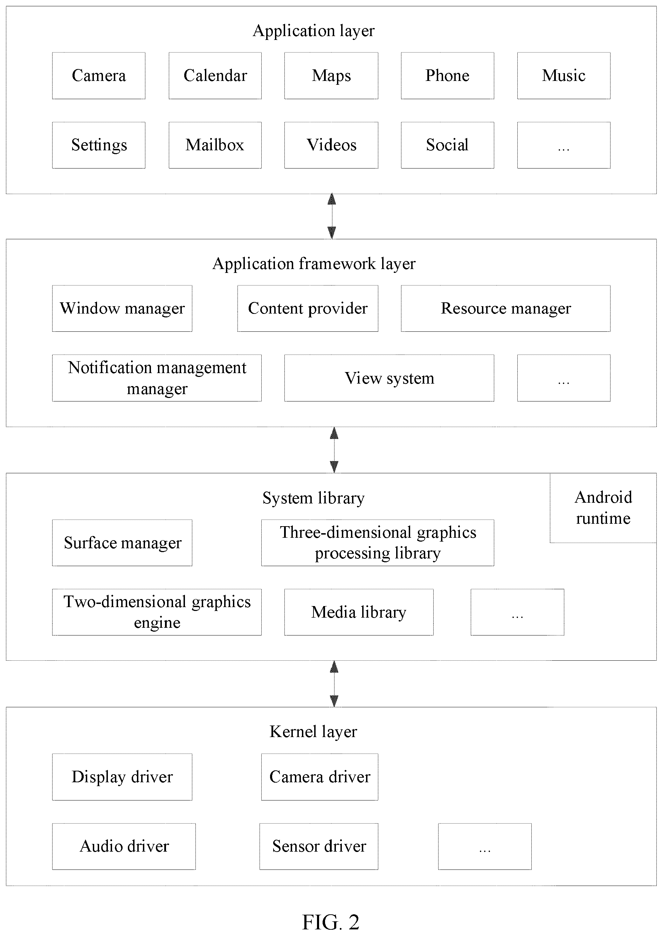

For example, FIG. 2 is a schematic diagram of a software structure of a terminal device according to an embodiment of this application. As shown in FIG. 2, a layered architecture divides software into several layers, and each layer has a clear role and task. The layers communicate with each other by using a software interface. In some embodiments, an Android system is divided into four layers, which are respectively an application layer, an application framework layer, an Android runtime (android runtime) and system library, and a kernel layer from top to bottom.

The application layer may include a series of application packages. As shown in FIG. 2, the application package may include applications such as Camera, Calendar, Phone, Maps, Music, Settings, Mailbox, Videos, Social, and the like.

The application framework layer provides an application programming interface (application programming interface, API) and a programming framework for the application at the application layer. The application framework layer includes some predefined functions.

As shown in FIG. 2, the application framework layer may include a window manager, a content provider, a resource manager, a view system, a notification manager, and the like.

The window manager is configured to manage a window program. The window manager may obtain a size of a display, determine whether there is a status bar, lock a screen, touch a screen, drag a screen, capture a screenshot, and the like.

In this embodiment of this application, the window manager is configured to determine a display manner of a first element on a home screen based on a screen touching operation of a user, for example, moving the first element to a lower area of a screen, or scaling down the first element and moving the first element to the lower area of the screen.

The content provider is configured to store and obtain data, and enable the data to be accessible to an application. The data may include a video, an image, audio, calls that are made and answered, browsing history and bookmarks, a phone book, and the like.

The view system includes visual controls such as a text display control and a picture display control. The view system may be configured to construct an application. A display interface may include one or more views. For example, a display interface including an SMS notification icon may include a view for displaying text and a view for displaying a picture.

The resource manager provides various resources for the application, for example, a localized string, an icon, a picture, a layout file, and a video file.

The notification manager enables an application to display notification information in a status bar, and may be configured to convey a notification message that may automatically disappear after a short stay without requiring user interaction. For example, the notification manager is configured to provide a notification of download completion, a message reminder, and the like. The notification manager may be further a notification that appears in the status bar at the top of the system in a form of a graph or scroll bar text, for example, a notification of an application running in the background, or a notification that appears on a screen in a form of a dialog window. For example, text information is prompted in the status bar, a prompt tone is made, the terminal device vibrates, or an indicator light blinks.

The android runtime includes a kernel library and a virtual machine. The android runtime is responsible for scheduling and management of the Android system.

The kernel library includes two parts: One part is a functional function that needs to be invoked by a java language, and the other part is a kernel library of Android.

The application layer and the application framework layer are run in the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playback and recording in a plurality of common audio and video formats, a still image file, and the like. The media library may support a plurality of audio and video coding formats, for example, MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes, in detail by using specific embodiments, the technical solutions of this application and how the foregoing technical problems are resolved by using the technical solutions of this application. The following several specific embodiments may be implemented independently, or may be combined with each other. For same or similar concepts or processes, details may not be described again in some embodiments.

In embodiments of this application, elements of different sizes produce different ripple effects. Specifically, in a scenario 1, when a size of a target element is 1×1 or the like, a terminal device may perform scaling processing on elements around the target element when receiving a target operation of a user, so that a ripple effect of a relatively small range (for example, two or three waveforms are generated around the 1×1 element) can be produced for the elements around the target element; in a scenario 2, when a size of a target element is 2×2 or the like, a terminal device may perform scaling processing on elements around the target element when receiving a target operation of a user, so that a moderate ripple effect (for example, three or four waveforms are generated around the 2×2 element) can be produced for the elements around the target element; or in a scenario 3, when a size of a target element is 2×4 or the like, a terminal device may perform scaling processing on elements around the target element when receiving a target operation of a user, so that a ripple effect of a relatively large range (for example, four or five waveforms are generated around the 2×4 element) can be produced for the elements around the target element. The target operation may be a touch and hold operation and a drag operation for the target element, so that the target element generates the target element moves; or the target operation may be a touch and hold operation for the target element. This is not limited in this embodiment of this application.

The ripple effect may be understood as a water ripple-like effect produced around an object when the object is thrown into water. It may be understood that the terminal device may simulate the water ripple effect by scaling the elements around the target element.

It may be understood that the size of the target element is not limited to the foregoing sizes. For example, the size of the target element may be alternatively a value such as 2×3, 1×2, 3×3, or 4×4. Adaptively, elements of different sizes may also bring different quantities of waveforms and scaling effects of different amplitude. This is not limited in this embodiment of this application.

It may be understood that, embodiments of this application are illustrated by using a mobile phone as an example of the terminal device, and this example does not constitute a limitation on embodiments of this application.

Scenario 1: When the target element is a 1×1 application icon, folder icon, or the like, the terminal device may perform scaling processing on the elements around the target element when receiving the target operation of the user, so that a ripple effect of a relatively small range (for example, two or three waveforms are generated around the 1×1 element) is produced for the elements around the target element.

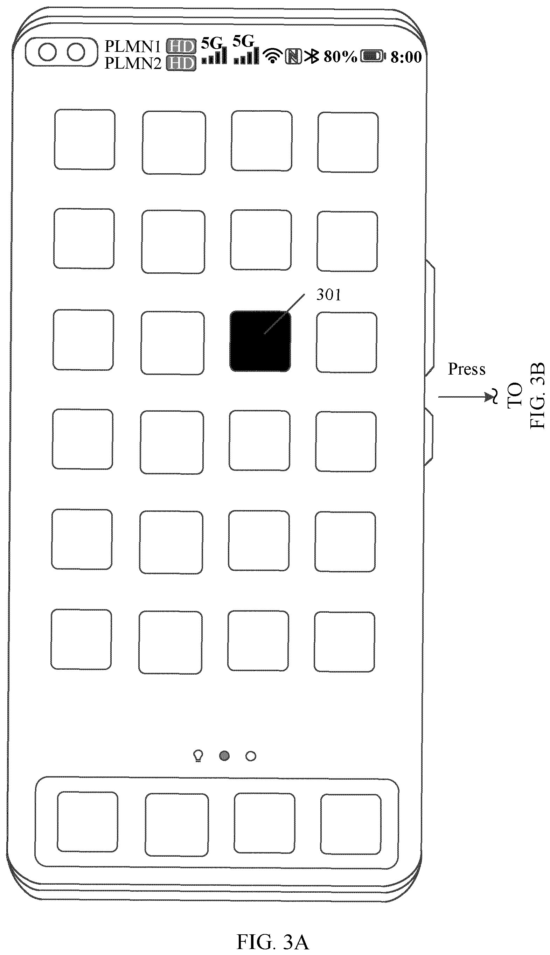

It may be understood that before the ripple effect corresponding to the target element whose size is 1×1 is described, the target operation that triggers the ripple effect is described. For example, FIG. 3A to FIG. 3E are a schematic diagram of an interface in which a ripple effect is triggered according to an embodiment of this application.

The terminal device displays an interface shown in FIG. 3A. The interface may be a home screen of the terminal device. A plurality of 1×1 elements may be displayed in the interface, for example, including a target element 301, an element in a dock (dock) bar at the bottom of the interface, and a plurality of elements displayed around the target element 301. Any element in the interface shown in FIG. 3A may be an application icon, a folder icon, and/or the like. A size of the target element 301 in the interface may be a default size, for example, a proportion of the target element 301 may be 100%.

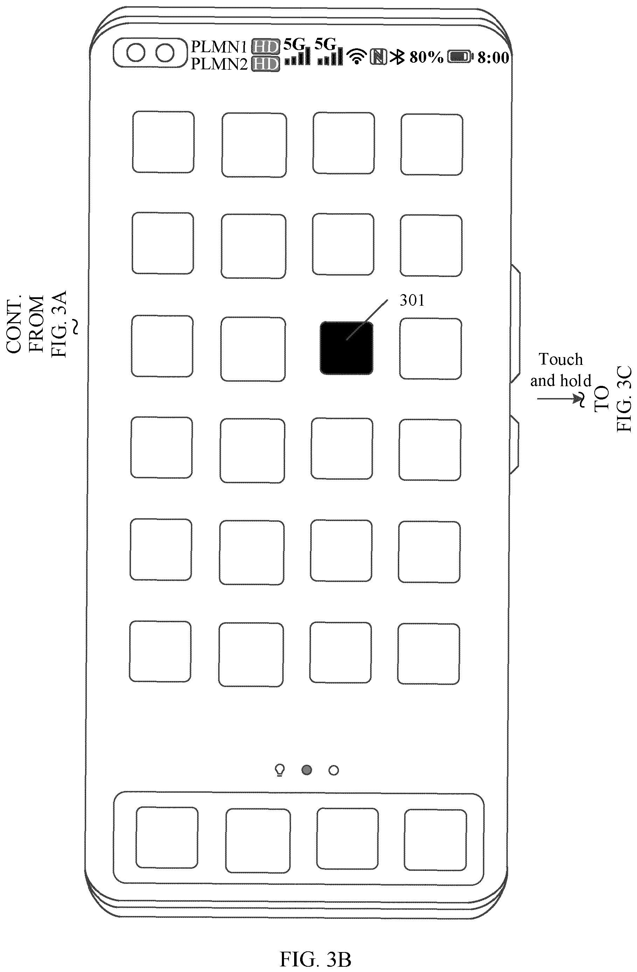

In the interface shown in FIG. 3A, when the terminal device receives a pressing operation or another triggering operation performed by the user on the target element 301, the terminal device may display an interface shown in FIG. 3B. In the interface shown in FIG. 3B, in response to the pressing operation performed by the user, the terminal device may scale down the target element 301 to obtain the scaled-down target element 301, for example, scale down the target element 301 to a value such as 90%, to indicate that the user selects the target element 301.

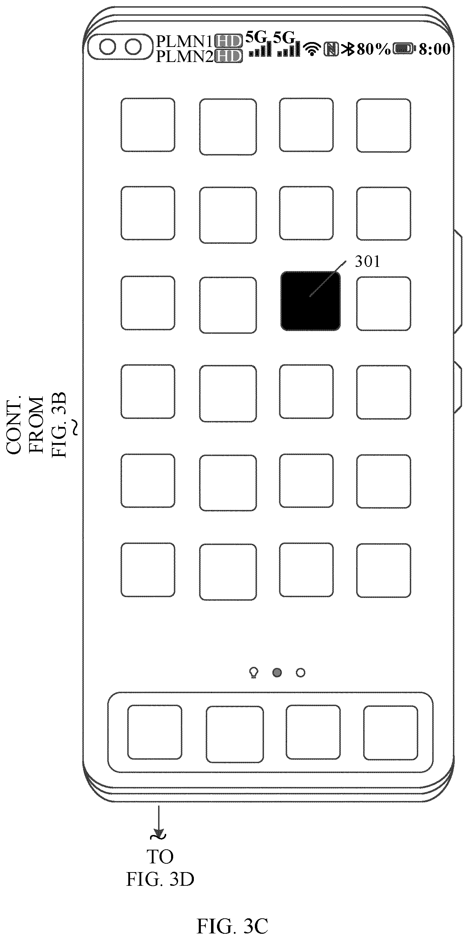

In the interface shown in FIG. 3B, if time for which the pressing operation continuously acts on the target element 301 exceeds a specific threshold, or this is understood as that if a touch and hold operation for the target element 301 is received when a finger in the pressing operation is not released, the terminal device may display an interface shown in FIG. 3C. In the interface shown in FIG. 3C, in response to the continuous pressing operation or the touch and hold operation of the user, the terminal device may scale up the scaled-down target element 301 in the interface shown in FIG. 3B, to obtain the scaled-up target element 301, for example, scale up the scaled-down target element 301 to a value such as 110%.

It may be understood that a process shown by FIG. 3A to FIG. 3C may also be collectively referred to as: The terminal device receives the touch and hold operation for the target element 301 in the interface shown in FIG. 3A, where the touch and hold operation may include a pressing operation for the target element 301 and a touch and hold operation performed when the pressing operation continuously acts on the target element 301.

For example, when the terminal device receives the touch and hold operation for the target element 301 in the interface shown in FIG. 3A, the terminal device may highlight the target element 301 (for example, scale up the target element 301 for display; for example, a size of the target element 301 in the interface shown in FIG. 3C is 110% of a size of the target element 301 in the interface shown in FIG. 3A).

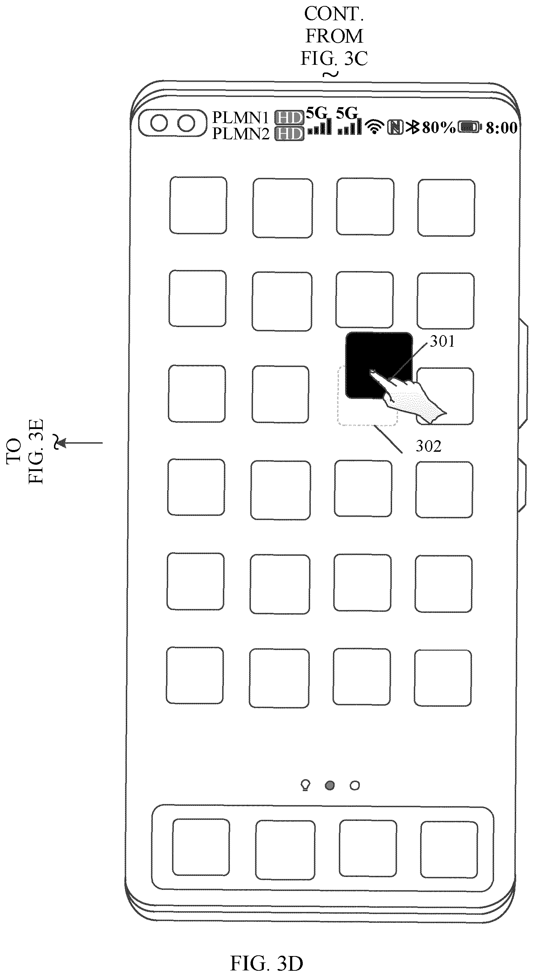

Further, in the interface shown in FIG. 3C, if the pressing operation is continuously located on the target element 301, when the terminal device receives an operation that the user drags the target element 301, the terminal device may display an interface shown in FIG. 3D. As shown in the interface shown in FIG. 3D, the target element 301 in the interface may keep in a highlighted state, and a dashed-line box 302 is displayed at a start location from which the target element 301 is dragged. The dashed-line box 302 is used to indicate a location to which the target element 301 is returned when the user releases a finger.

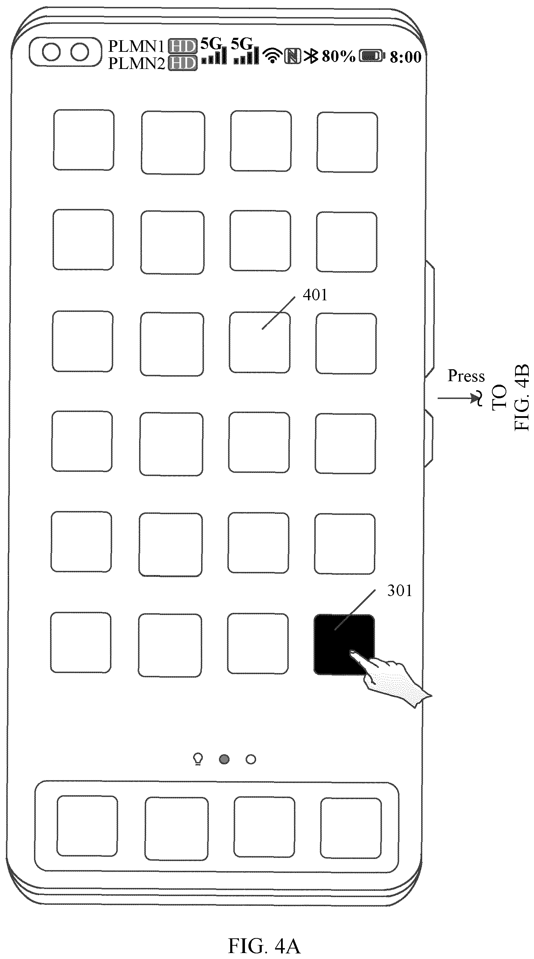

It may be understood that, in the interface shown in FIG. 3D, when the user drags the target element 301 within a specific range centered on the target element 301, the dashed-line box 302 may be kept at a location shown in FIG. 3D; or when the user drags the target element 301 beyond a specific range centered on the target element 301, the dashed-line box 302 may be displayed at another location (refer to an embodiment corresponding to FIG. 4A to FIG. 4F). When the user drags the target element 301 beyond the specific range centered on the target element 301, this may be understood as that the user may need to move the target element 301 to another location. Therefore, the terminal device determines, in real time based on a location to which the user drags the target element 301, a location to which the target element 301 may be returned when the user releases a finger (which is alternatively understood as a location of a dashed-line box corresponding to the target element 301).

The specific range may be a range in which a circle that is centered on the target element 301 and whose radius is R0 is located, and a value of R0 may be less than a preset distance threshold. The preset distance threshold may be a distance between a center of the target element 301 and a center of an element that is the closest to the target element 301 (for example, an element on the right of the target element 301).

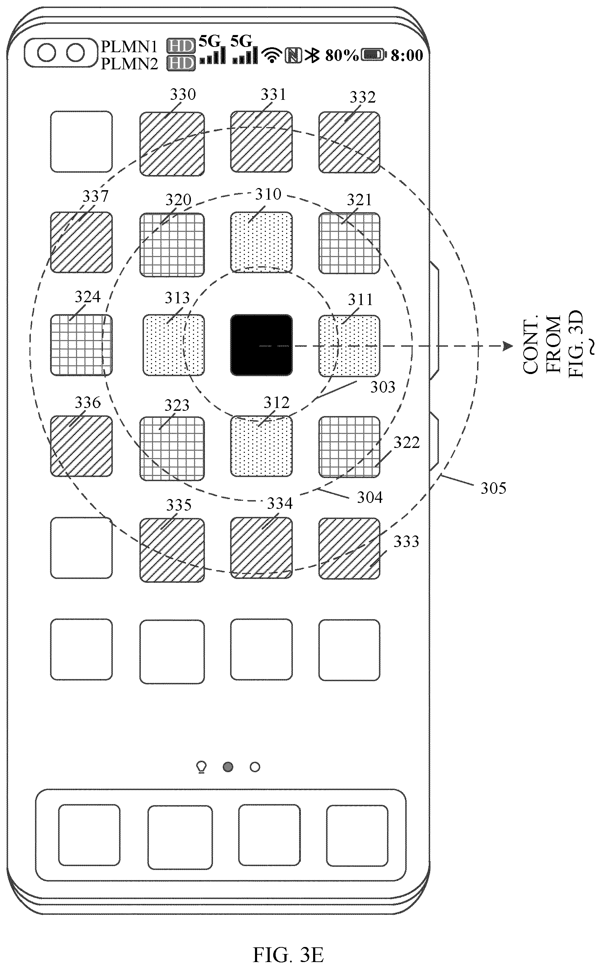

If the target element 301 is located at a location in the interface shown in FIG. 3D, when receiving an operation that the user releases a finger, the terminal device may place the target element 301 at a location of the dashed-line box 302, and display an interface shown in FIG. 3E. In the interface shown in FIG. 3E, highlighting of the target element 301 is canceled, and the target element 301 is restored to a display status and a size in the interface shown in FIG. 3A.

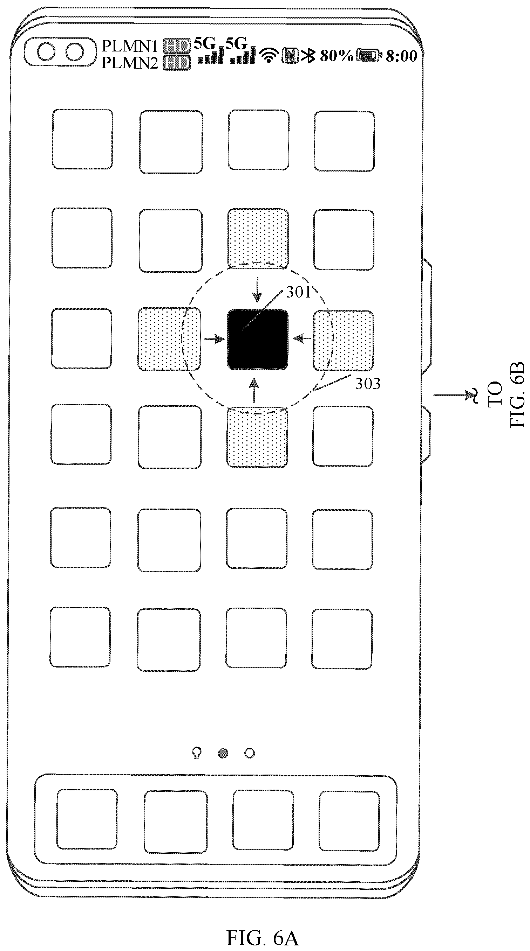

It may be understood that, in the interface shown in FIG. 3E, the terminal device may sequentially display a ripple effect for elements around the target element 301 in a direction (for example, a pointing direction of an arrow) from the inside to the outside by using the target element 301 as a center. For example, the terminal device may preferentially perform scaling processing (for a specific scaling processing process, refer to an embodiment corresponding to FIG. 6A to FIG. 6D) on elements other than the target element 301 in a first range 303 of the target element 301 (and that the first range 303 passes through). The elements other than the target element 301 in the first range 303 (or referred to as elements corresponding to the first range 303 or a first layer of elements, for example, elements including polka dots in a block diagram shown in FIG. 3E) may include an element 310, an element 311, an element 312, and an element 313.

An element corresponding to the first range 303 may be any element around the target element 301 for which a center of the element and the center of the target element 301 is less than a first distance threshold. Alternatively, the element corresponding to the first range 303 may be an element other than the target element 301 in a range in which a circle that is centered on the target element 301 and whose radius is R1 is located (and that the circle passes through).

Further, after a time period threshold for performing scaling processing on the element corresponding to the first range 303, the terminal device may perform scaling processing on elements in a second range 304 (and that the second range 304 passes through) around the target element 301 other than the first range 303. The elements in the second range 304 other than the first range 303 (or referred to as elements corresponding to the second range 304 or a second layer of elements, for example, elements including grids in the block diagram shown in FIG. 3E) may include an element 320, an element 321, an element 322, an element 323, and an element 324. Elements corresponding to each range are centered on a location of the target element.

An element corresponding to the second range 304 may be any element around the target element 301 for which a distance between a center of the element and the center of the target element 301 is greater than or equal to the first distance threshold and is less than a second distance threshold. Alternatively, the element corresponding to the second range 304 may be an element other than the elements in the first range 303 in a range in which a circle that is centered on the target element 301 and whose radius is R2 is located, where R2 is greater than R1. The elements in the first range 303 may include the element corresponding to the first range 303 and the target element 301.

In a possible implementation, after a time period threshold for performing scaling processing on the elements corresponding to the second range 304, the terminal device may perform scaling processing on elements in a third range 305 (and that the third range 305 passes through) around the target element 301 other than the second range 304 and the first range 303. The elements in the third range 305 other than the second range 304 and the first range 303 (or referred to as elements corresponding to the third range 305, for example, elements including oblique lines in the block diagram shown in FIG. 3E) may include an element 330, an element 331, an element 332, an element 333, an element 334, an element 335, an element 336, and an element 337.

The element corresponding to the third range 305 may be any element around the target element 301 for which a distance between a center of the element and the center of the target element 301 is greater than or equal to the second distance threshold and less than a third distance threshold. A difference between the third distance threshold and the second distance threshold and a difference between the third distance threshold and the second distance threshold may be the same or different. Alternatively, the element corresponding to the third range 305 may be an element other than the elements in the second range 304 in a range in which a circle that is centered on the target element 301 and whose radius is R3 is located, where R3 is greater than R2. The elements in the second range 304 may include the target element, the elements corresponding to the first range 303, and the elements corresponding to the second range 304.

As shown in the descriptions in the interface shown in FIG. 3E, a value of the time period threshold may be a value such as 50 ms, 60 ms, or 80 ms. This is not limited in this embodiment of this application.

It may be understood that, based on that the terminal device displays the interface shown in FIG. 3E, the terminal device may successively perform scaling processing on elements corresponding to the ranges in a sequence of the first range 303, the second range 304, and the third range 305, so that scaling of elements in any range presents a waveform.

In a possible implementation, FIG. 4A to FIG. 4F are a schematic diagram of another interface in which a ripple effect is triggered according to an embodiment of this application.

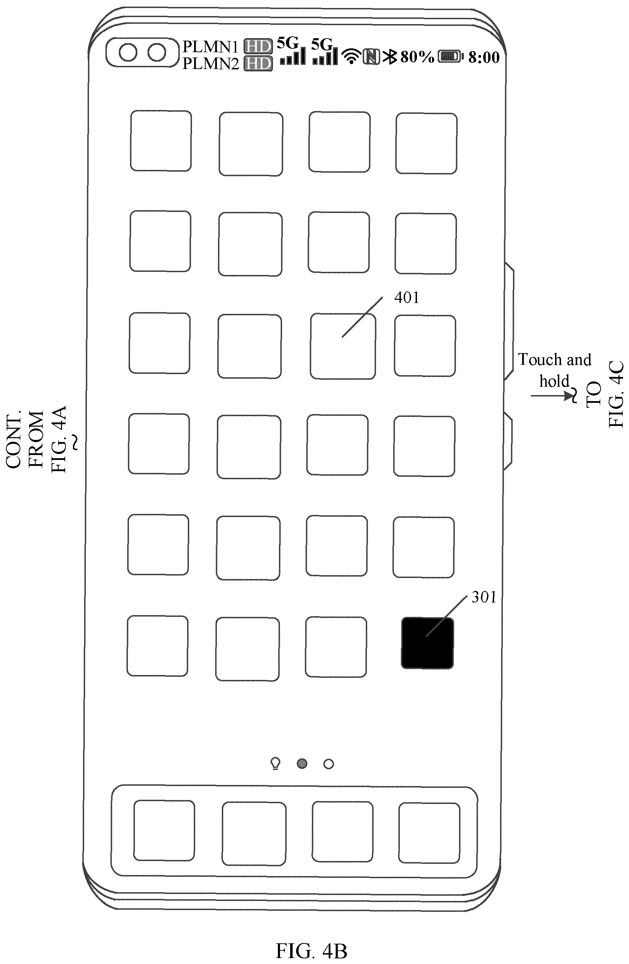

In an interface shown in FIG. 4A, the interface may include a target element 301 and an element 401. When the terminal device receives a pressing operation performed by the user on the target element 301, the terminal device may scale down the target element 301 shown in FIG. 4A, and display an interface shown in FIG. 4B.

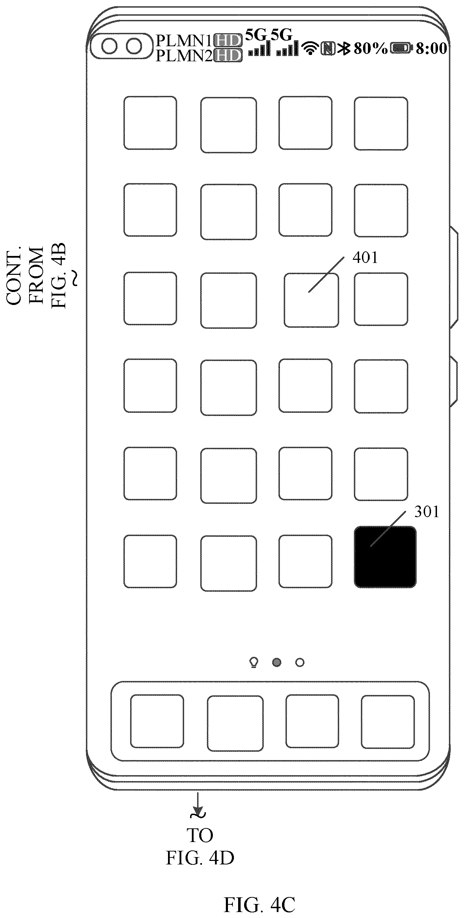

In the interface shown in FIG. 4B, when the pressing operation continuously acts on the scaled-down target element 301 (or the operation is referred to as a touch and hold operation for the target element 301), the terminal device may highlight the target element 301, for example, display an interface shown in FIG. 4C.

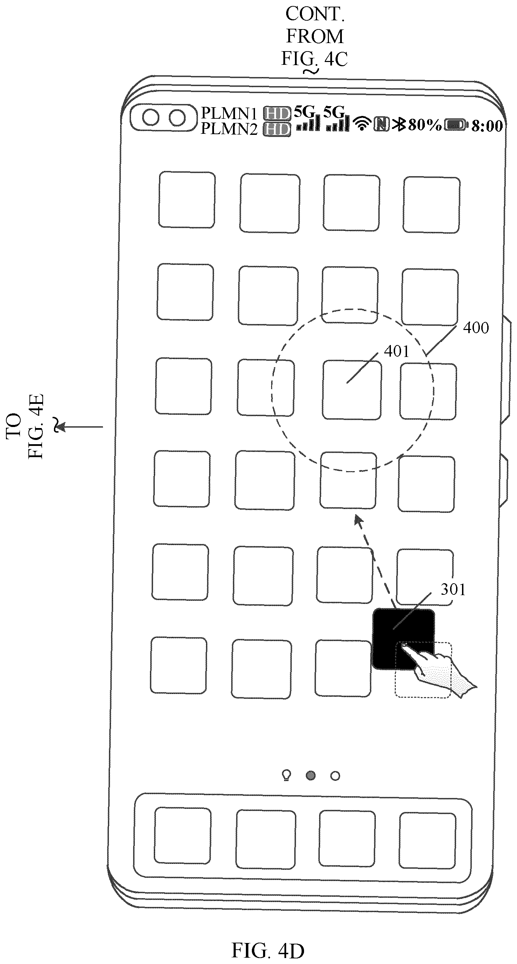

Further, in the interface shown in FIG. 4C, if the pressing operation is continuously located on the target element 301, when the terminal device receives an operation that the user drags the target element 301, the terminal device may display an interface shown in FIG. 4D. In the interface shown in FIG. 4D, the target element 301 in the interface may keep in a highlighted state, a location of the target element 301 does not exceed a specific range centered on the target element 301, and a dashed-line box is displayed at a start location from which the target element 301 is dragged.

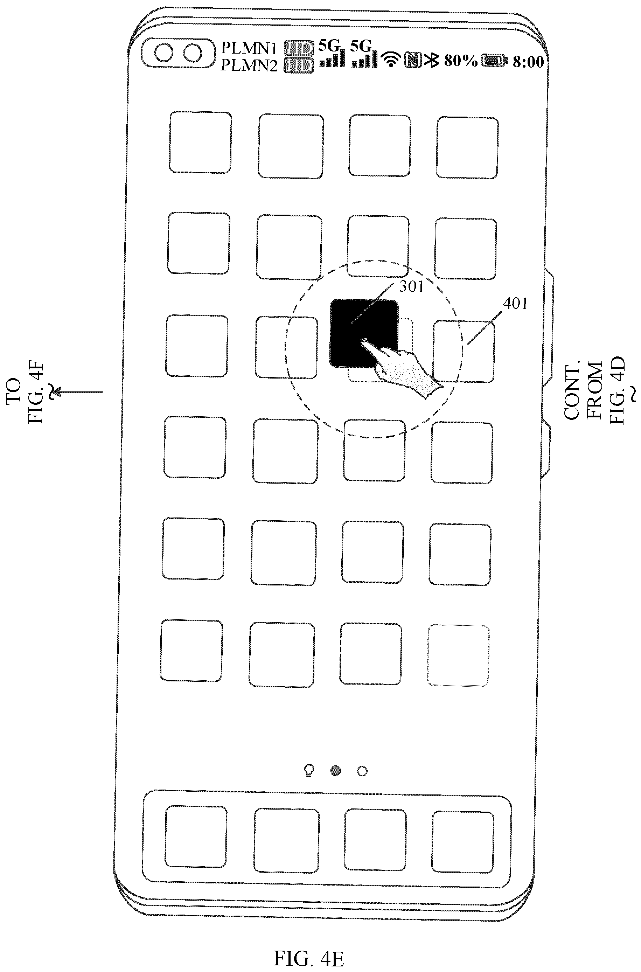

In the interface shown in FIG. 4D, when the terminal device receives an operation that the user drags the target element 301 to a specific range (a range 400 shown in FIG. 4D) centered on the element 401, the terminal device may first move the element 401, for example, move the element 401 to the right by a location of one icon, so that a location of the element 401 in the interface shown in FIG. 4D may be reserved for the target element 301, for example, the terminal device displays an interface shown in FIG. 4E. In interface shown in FIG. 4E, a dashed-line box may be displayed at a location at which the element 401 is located before the element 401 is moved.

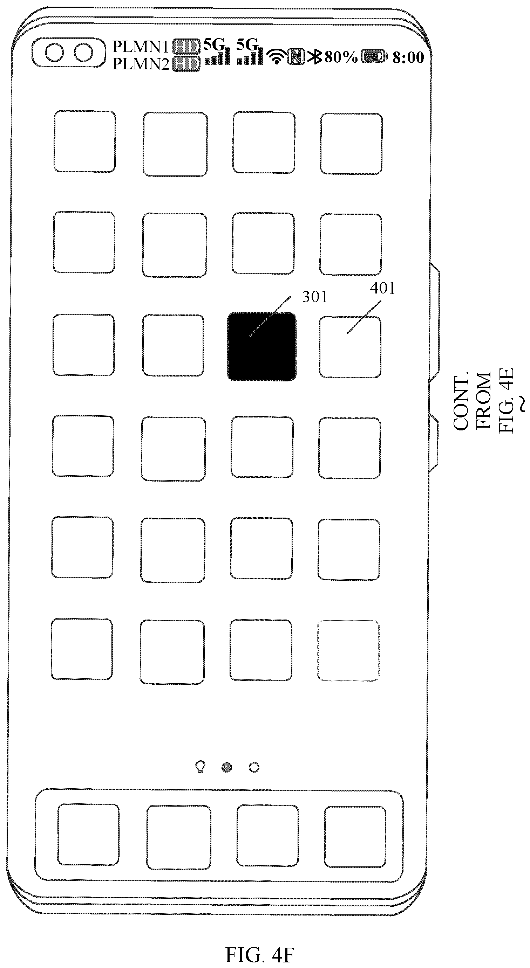

Further, if the target element 301 is located at a location in the interface shown in FIG. 4E, when receiving an operation that the user releases a finger, the terminal device may place the target element 301 at a location of the dashed-line box, and display an interface shown in FIG. 4F. In the interface shown in FIG. 4F, highlighting of the target element 301 is canceled, and the target element 301 is restored to a display status and a size in the interface shown in FIG. 4A.

It may be understood that when the user moves the target element and therefore a location of another element on the home screen changes, the terminal device may first squeeze, based on the location of the target element, an element at a target location at which the target element may be displayed when the user releases the finger, and then move the target element to the target location when the user releases the finger.

In a possible implementation, based on that the terminal device displays the interface shown in FIG. 4F, in the sequence of the first range 303, the second range 304, and the third range 305 described in the interface shown in FIG. 3E, the terminal device may successively perform scaling processing on elements corresponding to the ranges that are centered on the location of the target element.

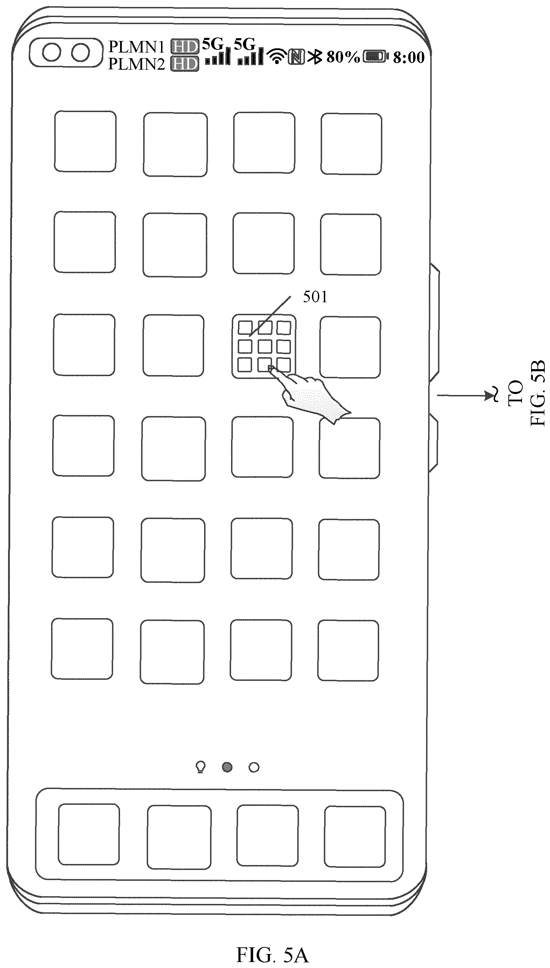

In a possible implementation, when the target element is a folder, the terminal device may also implement a ripple effect based on elements in the folder. For example, FIG. 5A to FIG. 5D are a schematic diagram of an interface in which a ripple effect is triggered in a folder according to an embodiment of this application.

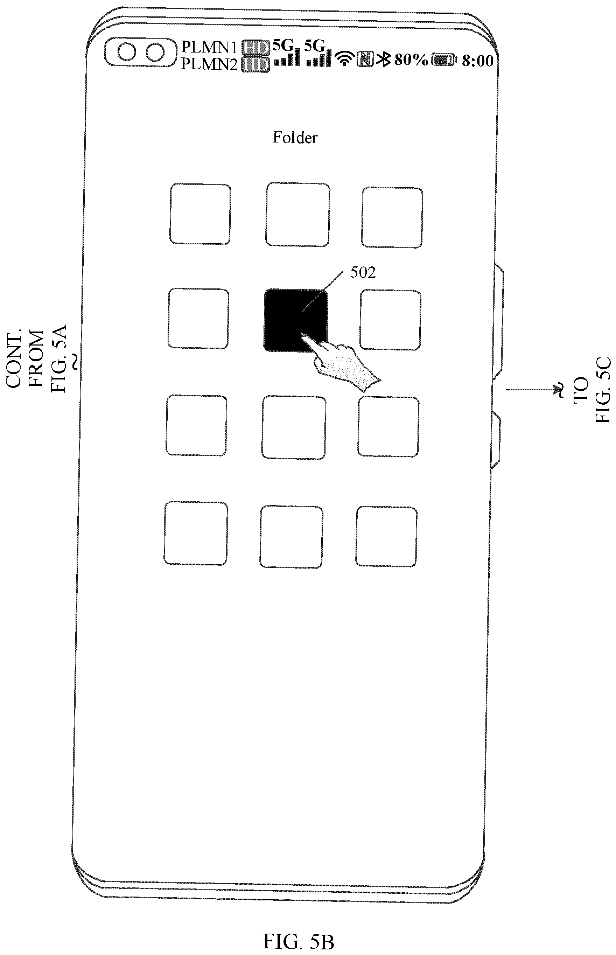

The terminal device displays an interface shown in FIG. 5A. The interface may include a folder 501. When the terminal device receives a triggering operation performed by the user on the folder 501, the terminal device may display an interface shown in FIG. 5B. The interface shown in FIG. 5B may be an interface corresponding to the folder, and the interface may include a plurality of elements in the folder 501, for example, a target element 502. The triggering operation may be a tap operation, a touch and hold operation, a voice operation, or the like.

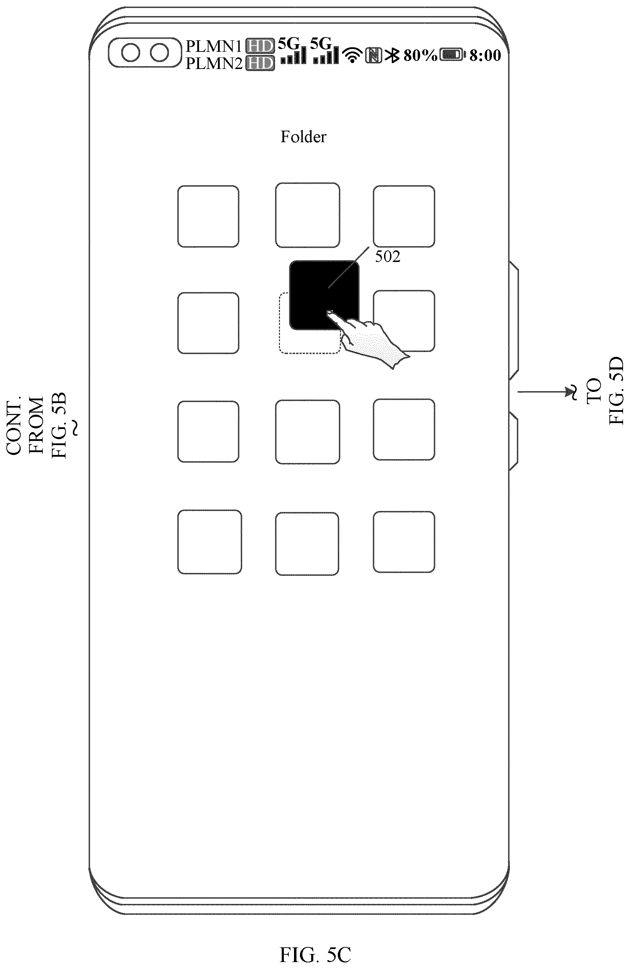

In the interface shown in FIG. 5B, if a pressing operation is continuously located on the target element 502, when the terminal device receives an operation that the user drags the target element 502, the terminal device may display an interface shown in FIG. 5C. In the interface shown in FIG. 5C, the target element 502 in the interface may keep in a highlighted state, a location of the target element 502 does not exceed a specific range centered on the target element 502, and a dashed-line box is displayed at a start location from which the target element 502 is dragged.

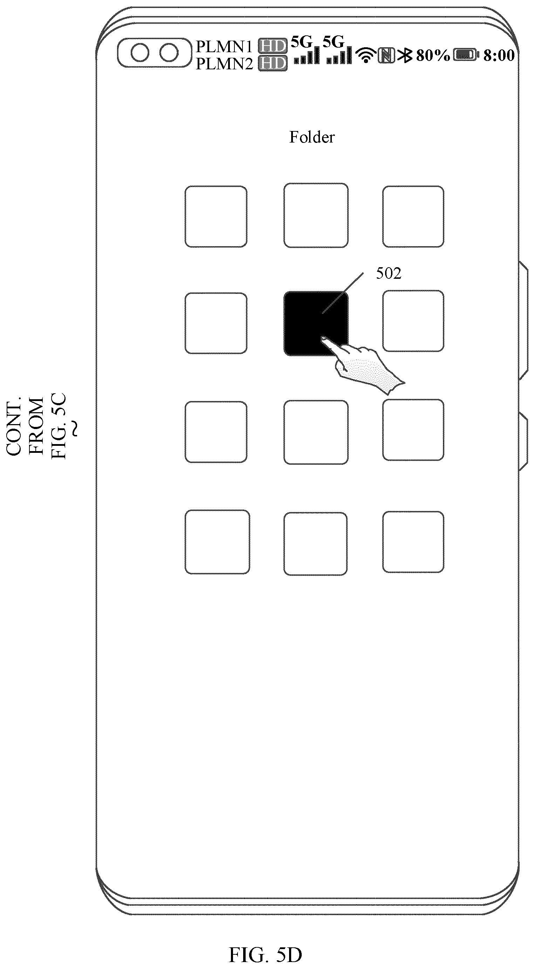

Further, if the target element 502 is located at the location in the interface shown in FIG. 5C, when receiving an operation that the user releases a finger, the terminal device may place the target element 502 at a location of the dashed-line box, and display an interface shown in FIG. 5D. In the interface shown in FIG. 5D, highlighting of the target element 502 is canceled, and the target element 502 is restored to a display status and a size in the interface shown in FIG. 5B.

It may be understood that, based on that the terminal device displays the interface shown in FIG. 5D, in the sequence of the first range 303, the second range 304, and the third range 305 described in the interface shown in FIG. 3E, the terminal device may successively perform scaling processing on elements in the folder that are corresponding to the ranges centered on the location of the target element.

Based on the embodiment corresponding to FIG. 3A to FIG. 3E (or FIG. 4A to FIG. 4F or FIG. 5A to FIG. 5D), movement of an element (which may be alternatively understood as a first waveform) corresponding to the first range around the target element is used an example for description. For example, FIG. 6A to FIG. 6D are a schematic diagram of an interface of a ripple effect according to an embodiment of this application.

The terminal device displays an interface shown in FIG. 6A. The interface shown in FIG. 6A is similar to the interface shown in FIG. 3E and the interface shown in FIG. 4F, and details are not described herein again. An element corresponding to a first range 303 in the interface shown in FIG. 6A may be displayed in a 100% size, and the element in the 100% size may be understood as a first state of the element.

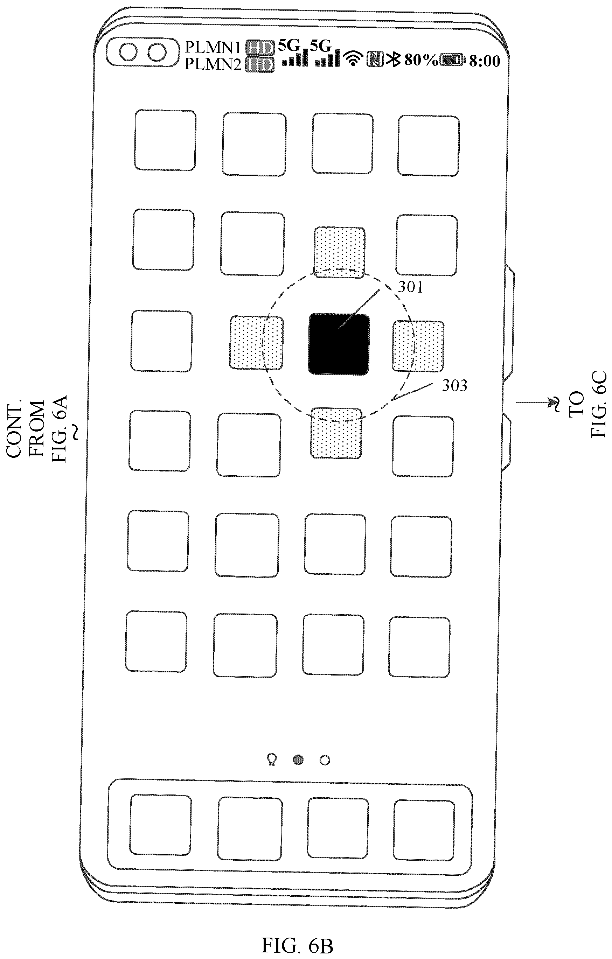

In the interface shown in FIG. 6A, the terminal device may scale down the element corresponding to the first range 303. For example, the terminal device may gradually scale down the element that is corresponding to the first range 303 and that is in the first state, for example, scale down the element corresponding to the first range 303 to a value such as 96%, so that the terminal device displays an interface shown in FIG. 6B. The scaled-down element in a value such as 96% may be understood as a second state of the element.

It may be understood that, in a process of scaling down the element corresponding to the first range 303, all elements corresponding to the first range 303 may be scaled down in a direction toward the target element 301 (which may be alternatively understood as being scaled down inwardly by using the target element 301 as a center), or any one of elements corresponding to the first range 303 may also be scaled down by using the element as a center. A scaling down manner is not specifically limited in this embodiment of this application.

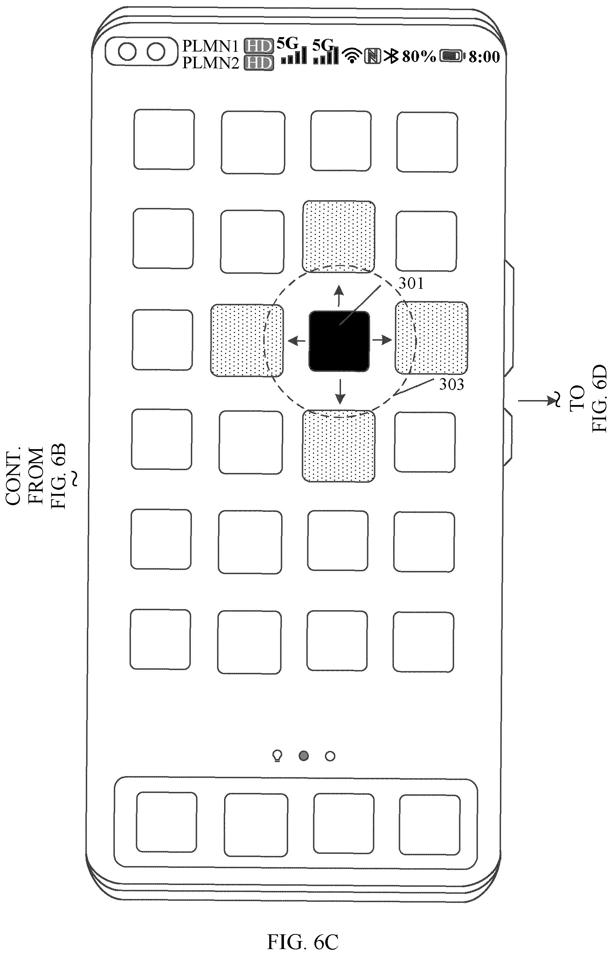

In the interface shown in FIG. 6B, the terminal device may scale up the scaled-down element corresponding to the first range 303. For example, the terminal device may gradually scale up the element that is corresponding to the first range 303 and that is in the second state, for example, scale up the element corresponding to the first range 303 to a value such as 103%, so that the terminal device displays an interface shown in FIG. 6C. The scaled-up element in a value such as 103% may be understood as a third state of the element.

It may be understood that, in a process of scaling up the element corresponding to the first range 303, all elements corresponding to the first range 303 may be scaled up in a direction away from the target element 301 (which may be alternatively understood as being scaled up outwardly by using the target element 301 as a center), or any one of elements corresponding to the first range 303 may be scaled up by using the element as a center. A scaling up manner is not specifically limited in this embodiment of this application.

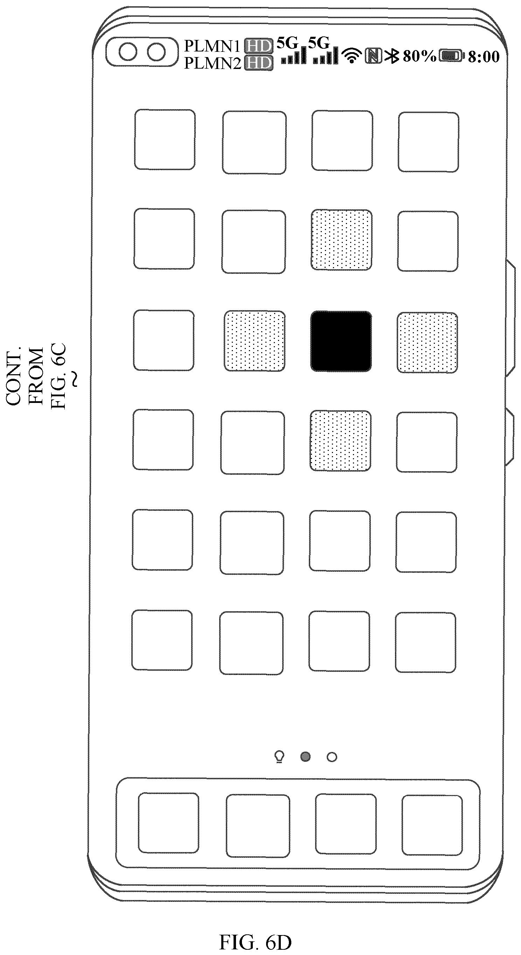

Further, in the interface shown in FIG. 6C, the terminal device may scale down the scaled-up element corresponding to the first range 303. For example, the terminal device may gradually scale down the element that is corresponding to the first range 303 and that is in the third state, for example, scale down the element corresponding to the first range 303 to a value such as 100%, so that the terminal device displays an interface shown in FIG. 6D, and the element corresponding to the first range 303 is returned to the first state.

It may be understood that, in a process of scaling the elements corresponding to the first range 303, scaling effects of the elements corresponding to the first range 303 are consistent.

In a possible implementation, the terminal device may implement scaling on the elements corresponding to the first range 303 based on the embodiment corresponding to FIG. 6A to FIG. 6D, so that after the elements corresponding to the first range 303 present the first waveform, the first waveform is repeatedly displayed, and display of the waveform ends and an interface shown in FIG. 6D is displayed when any operation performed by the user on the home screen is received.

In a possible implementation, the terminal device may implement scaling on the elements corresponding to the first range 303 based on the embodiment corresponding to FIG. 6A to FIG. 6D, so that the elements corresponding to the first range 303 present a ripple effect. The ripple effect presented by the elements corresponding to the first range 303 is only used as a ripple effect of the first waveform of the target element 301. Generally, to present a more vivid ripple effect, the terminal device may set 2-3 waveforms for the target element 301 whose size is 1×1, so that dynamic effects of a plurality of waveforms can be used to simulate diffusion and transmission of water surface ripples caused when an object is thrown into water.

For example, the terminal device may present a ripple effect of the second waveform based on scaling of the elements corresponding to the second range 304 in the interface shown in FIG. 3E, and present a ripple effect of the third waveform based on scaling of the elements corresponding to the third range 305. Display duration of any waveform may be a value such as 150 ms. The terminal device may display the second waveform after the first waveform has been displayed for 50 ms, and display the third waveform after the second waveform has been displayed for 50 ms. Waveforms are displayed in sequence, so that a dynamic ripple effect can be better presented.

It may be understood that for a process in which the terminal device scales the second waveform and the third waveform, refer to the descriptions in the embodiment corresponding to FIG. 6A to FIG. 6D. Details are not described herein again.

In a possible implementation, to present a more vivid ripple effect, the terminal device may set different display duration for the waveforms, or set different values for display time intervals between the waveforms. This is not limited in this embodiment of this application.

To simulate a case in which water surface ripples successively attenuate when an object is thrown into water, the terminal device may set different scaling proportions for different waveforms. For example, Table 1 is a schematic table of a scaling proportion of a waveform when a target element is 1×1 according to an embodiment of this application. Three waveforms are used as an example for description.

**Table 1 Schematic table of a scaling proportion of a waveform when a target element is 1×1**

| Size of a target element | Scaling | First waveform | Second waveform | Third waveform |
|---|---|---|---|---|
| 1×1 | Scale down | 96% | 98% | 99.5% |
| | Scale up | 103% | 101% | 100.5% |

It may be understood that, a larger difference (which is alternatively referred to as a scaling difference) between a scaling down proportion and a scaling up proportion of a waveform leads to larger scaling amplitude and larger waveform amplitude. As shown in FIG. 1, amplitude of the first waveform is greater than amplitude of the second waveform, and the amplitude of the second waveform is greater than amplitude of the third waveform, so that a dynamic effect that waveforms successively attenuate is presented.

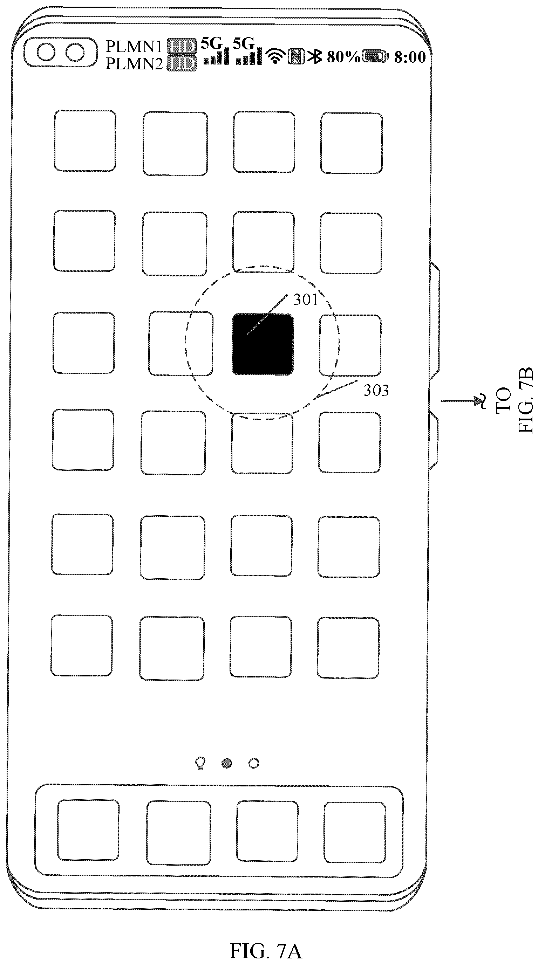

In a possible implementation, scaling values of the waveforms described in Table 1 are used as an example to illustrate a ripple effect produced when a 1×1 target element is placed at the target location. This example does not constitute a limitation on this embodiment of this application. For example, FIG. 7A to FIG. 7F are a schematic diagram of another interface of a ripple effect according to an embodiment of this application.

In the embodiment corresponding to FIG. 7A to FIG. 7F, an example in which a time interval between waveforms is 50 ms and display duration of any waveform is 150 ms is used to describe a ripple effect produced for the 1×1 target element.

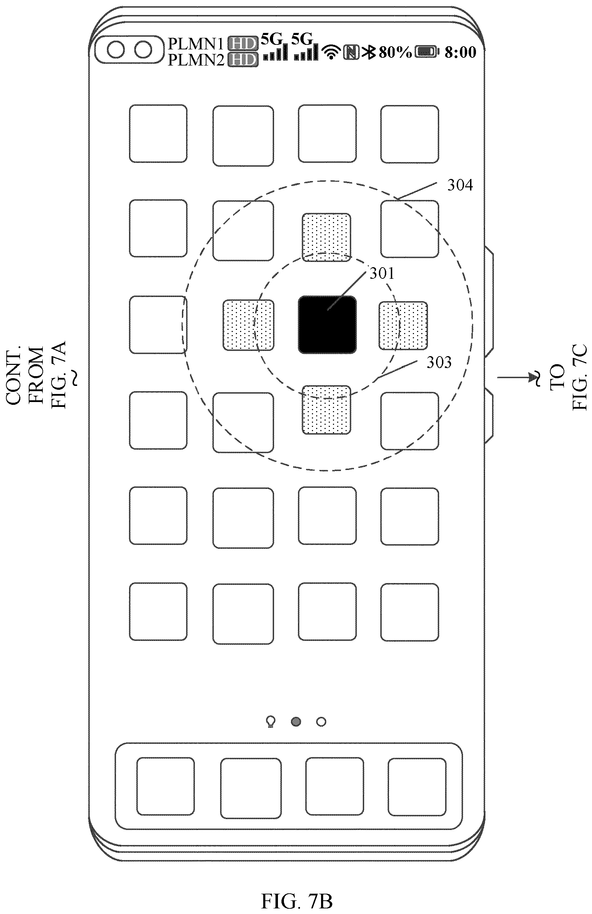

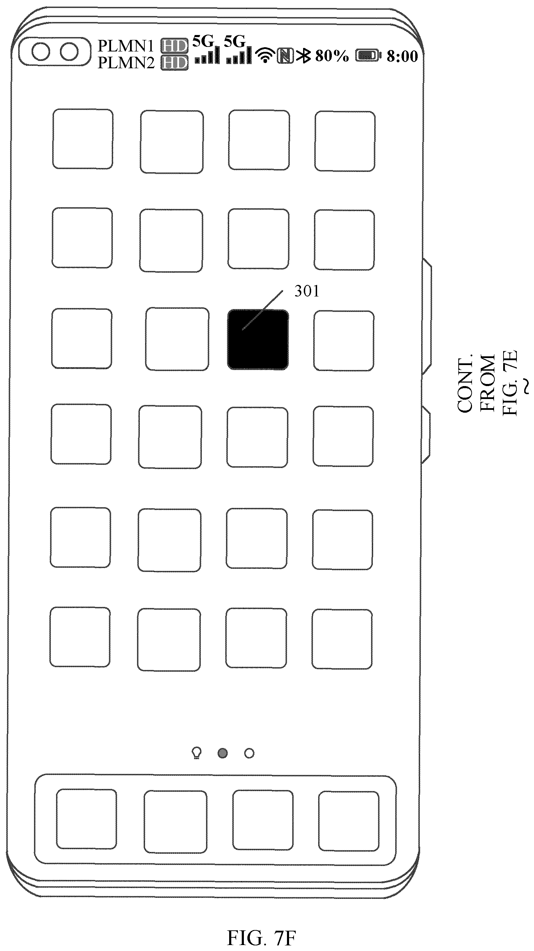

Based on that the terminal device triggers, based on the embodiment corresponding to FIG. 3A to FIG. 3E or FIG. 4A to FIG. 4F, the terminal device to display an interface shown in FIG. 7A, the terminal device may display, based on an interface shown in FIG. 7B to an interface shown in FIG. 7F, a ripple effect including a plurality of waveforms around the target element 301.

In the interface shown in FIG. 7A, the terminal device may scale down an element corresponding to a first range 303 based on a scaling down proportion 96% in Table 1, and present the first waveform, so that the terminal device displays the interface shown in FIG. 7B.

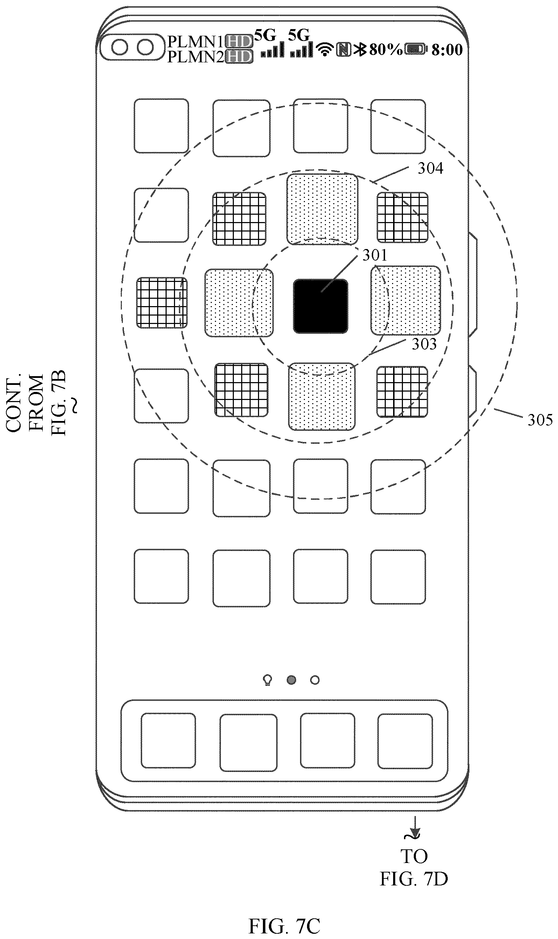

When duration from the interface shown in FIG. 7A to the interface shown in FIG. 7B is 50 ms, the terminal device may scale down, after 50 ms after the first waveform is displayed, an element corresponding to a second range 304 in the interface shown in FIG. 7B. For example, the terminal device may scale down the element corresponding to the second range 304 based on the scaling down proportion 98% in Table 2, and present the second waveform, so that the terminal device displays an interface shown in FIG. 7C. Synchronously, in the interface shown in FIG. 7B, the terminal device may scale up the scaled-down element corresponding to the first range 303 based on the scaling up proportion 103% in Table 1, and continue to present the first waveform, so that the terminal device displays the interface shown in FIG. 7C.

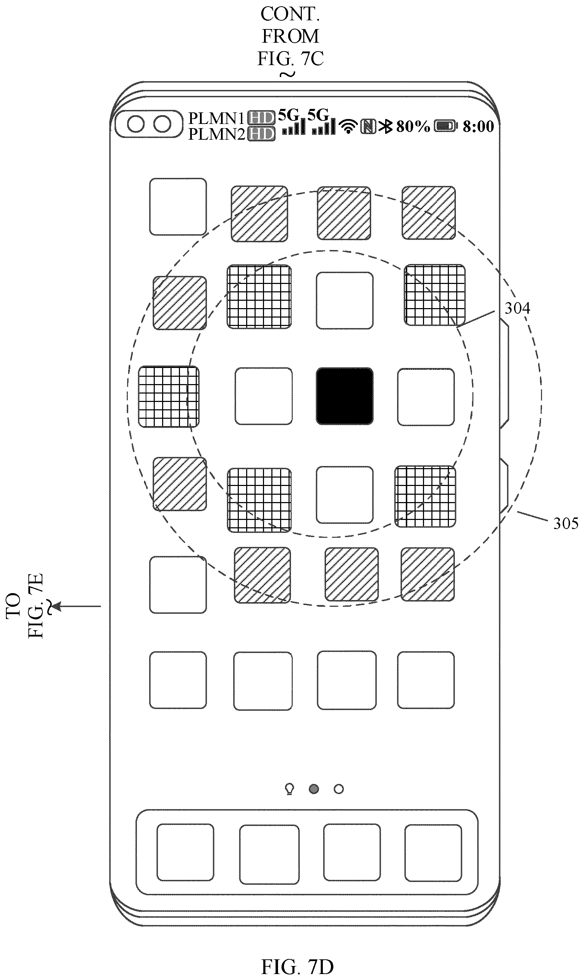

When duration from the interface shown in FIG. 7B to the interface shown in FIG. 7C is 50 ms, the terminal device may scale down, after 50 ms after the second waveform is displayed, an element corresponding to a third range 305 in the interface shown in FIG. 7C. For example, the terminal device may scale down the element corresponding to the third range 305 based on the scaling down proportion 99.5% in Table 1, and present the third waveform, so that the terminal device displays an interface shown in FIG. 7D. Synchronously, in the interface shown in FIG. 7C, the terminal device may scale up the scaled-down element corresponding to the second range 304 based on the scaling up proportion 101% in Table 1, and continue to present the second waveform, so that the terminal device displays the interface shown in FIG. 7D. Synchronously, in the interface shown in FIG. 7C, the terminal device may scale down, to 100%, the element that is corresponding to the first range 303 and that is scaled up to 103%, and continue to present the first waveform, so that the terminal device displays the interface shown in FIG. 7D.

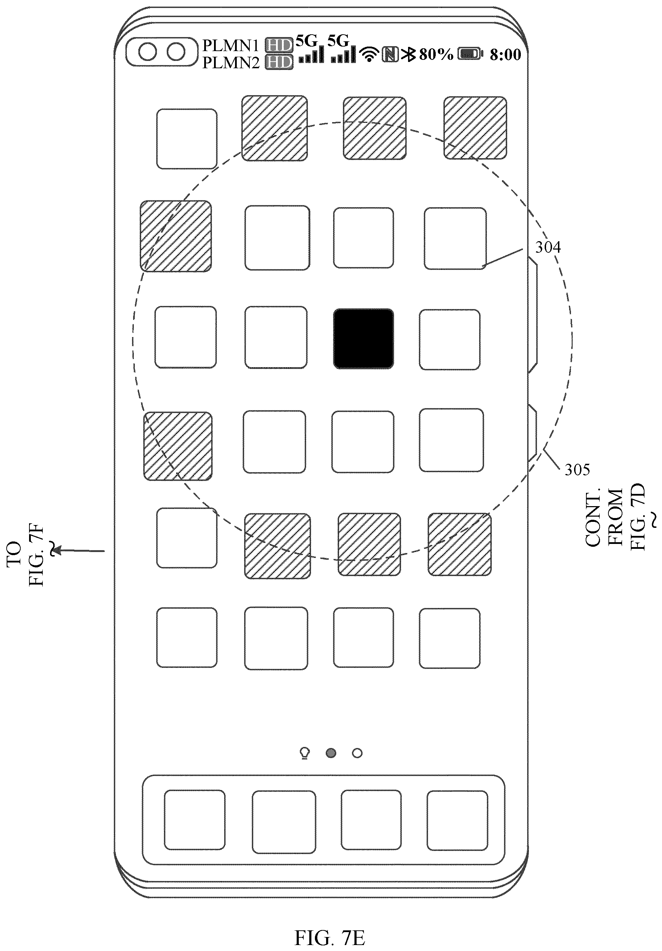

Further, in the interface shown in FIG. 7D, the terminal device may scale up the scaled-down element corresponding to the third range 305 based on the scaling up proportion 100.5% in Table 1, so that the terminal device displays an interface shown in FIG. 7E, and continues to present the third waveform. Synchronously, in the interface shown in FIG. 7D, the terminal device may scale down, to 100%, the element that is corresponding to the second range 304 and that is scaled up to 101%, and continue to present the second waveform, so that the terminal device displays the interface shown in FIG. 7E.

Further, in the interface shown in FIG. 7E, the terminal device may scale down, to 100%, the element that is corresponding to the third range 305 and that is scaled up to 100.5%, and continue to present the third waveform, so that the terminal device displays the interface shown in FIG. 7F.

It may be understood that the terminal device may display a ripple effect of three waveforms corresponding to the 1×1 target element based on the embodiment corresponding to FIG. 7A to FIG. 7F.

In a possible implementation, after displaying the three waveforms once, the terminal device may alternatively continue to repeatedly display the three waveforms, to present an effect that ripples occur for a plurality of times, and when receiving any operation performed by the user on the home screen, end display of the ripple effect corresponding to the three waveforms; or the terminal device may end display after displaying the three waveforms once.

Based on this, the terminal device can drag the target element to another location when accidentally touching the target element, and when the target element is returned to a target location, the terminal device produces a ripple effect around the target location, so that the user can notice the accidentally touched target element in a timely manner.

Scenario 2: When the target element is a 2×2 card, widget, or the like, the terminal device may perform scaling processing on elements around the target element when receiving the target operation of the user, so that a moderate ripple effect (for example, three or four waveforms are generated around the 2×2 element) is produced for the elements around the target element.

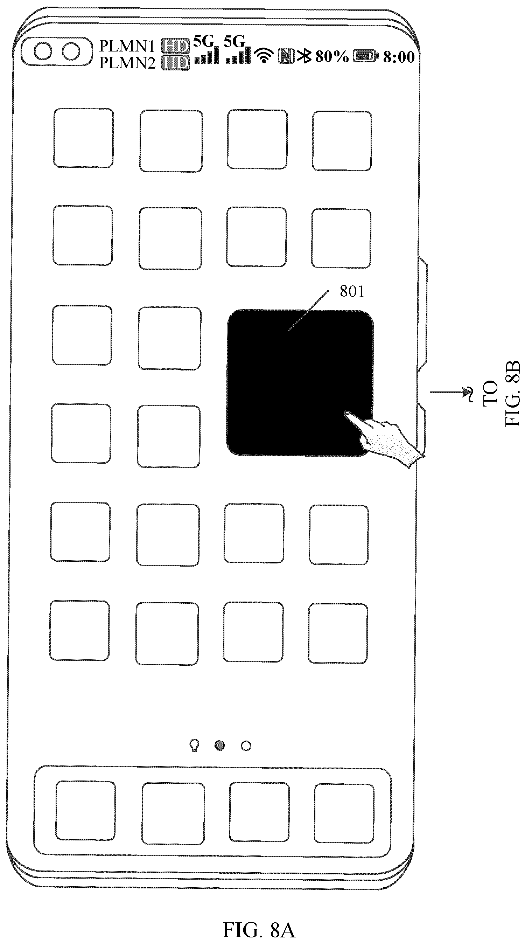

For example, FIG. 8A to FIG. 8C are a schematic diagram of still another interface in which a ripple effect is triggered according to an embodiment of this application.

The terminal device displays an interface shown in FIG. 8A, and the interface may include a card 801 (which is alternatively referred to as a target element 801).

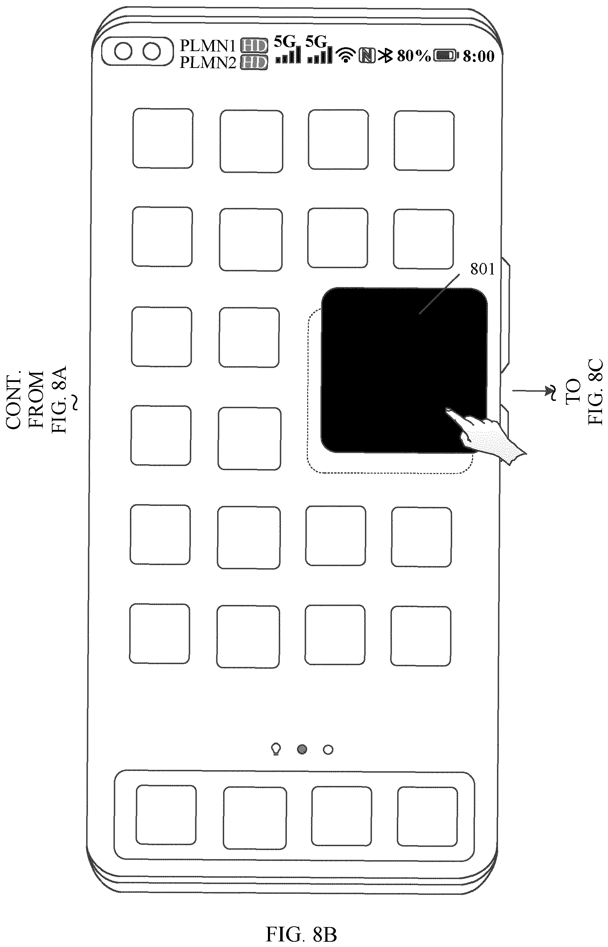

In the interface shown in FIG. 8A, when the terminal device receives a touch and hold operation performed by the user on the target element 801, the terminal device may highlight the target element 801, and if a pressing operation is continuously located on the target element 801, when the terminal device receives an operation that the user drags the target element 801, the terminal device may display an interface shown in FIG. 8B. In the interface shown in FIG. 8B, the target element 801 in the interface may keep in a highlighted state, and a 2×2 dashed-line box is displayed at a start location from which the target element 801 is dragged.

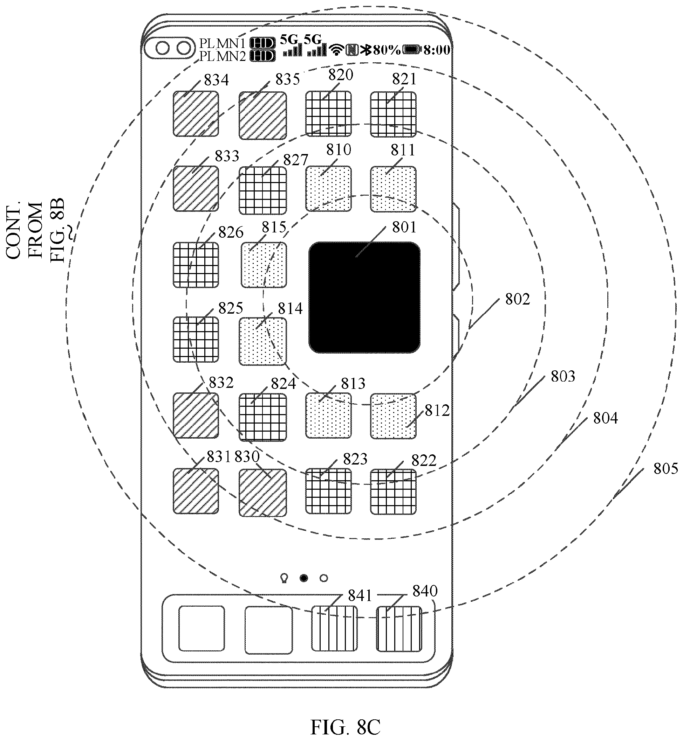

If the target element 801 is located at a location in the interface shown in FIG. 8B, when the terminal device receives an operation that the user releases a finger, the terminal device may place the target element 801 at a location of the dashed-line box, and display an interface shown in FIG. 8C. In the interface shown in FIG. 8C, highlighting of the target element 801 is canceled, and the target element 801 is restored to a display status and a size in the interface shown in FIG. 8A.

It may be understood that, in the interface shown in FIG. 8C, the terminal device may successively scale elements around the target element 801 in a direction from the inside to the outside by using the target element 801 as a center, thereby presenting a ripple effect. For example, the terminal device may preferentially scale elements corresponding to a first range 802, and the elements corresponding to the first range 802 may include an element 810, an element 811, an element 812, an element 813, an element 814, and an element 815.

After a time period threshold after scaling processing is performed on the elements corresponding to the first range 802, the terminal device may perform scaling processing on elements corresponding to a second range 803, and the elements corresponding to the second range 803 may include an element 820, an element 821, an element 822, an element 823, an element 824, an element 825, an element 826, and an element 827.

After a time period threshold after scaling processing is performed on the elements corresponding to the second range 803, the terminal device may perform scaling processing on elements corresponding to a third range 804, and the elements corresponding to the third range 804 may include an element 830, an element 831, an element 832, an element 833, an element 834, and an element 835.

In a possible implementation, after a time period threshold after scaling processing is performed on the elements corresponding to the third range 804, the terminal device may perform scaling processing on elements corresponding to a fourth range 805, and the elements corresponding to the fourth range 805 may include an element 840 and an element 841. The element 840 and the element 841 may be elements in a dock bar.

It may be understood that for definitions of the first range, the second range, and the third range in the embodiment corresponding to FIG. 8A to FIG. 8C, refer to descriptions in the embodiment corresponding to FIG. 3A to FIG. 3E. The first range 802 in the embodiment corresponding to FIG. 8A to FIG. 8C may be larger than the first range 303 in the embodiment corresponding to FIG. 3A to FIG. 3E. The second range 803 in the embodiment corresponding to FIG. 8A to FIG. 8C may be larger than the second range 304 in the embodiment corresponding to FIG. 3A to FIG. 3E. The third range 804 in the embodiment corresponding to FIG. 8A to FIG. 8C may be larger than the third range 305 in the embodiment corresponding to FIG. 3A to FIG. 3E.

It may be understood that for a process in which the terminal device scales any range (which is alternatively understood as any waveform) around the 2×2 target element, refer to descriptions in the embodiment corresponding to FIG. 6A to FIG. 6D. Details are not described herein again.

It may be understood that because a size of the target element 801 is relatively large, to simulate a dynamic effect that when objects of different sizes are thrown into water, a larger area and larger mass of an object lead to a larger range of formed ripples and larger amplitude of waveforms, the terminal device sets different scaling proportions for different waveforms of the 2×2 target element. For example, Table 2 is a schematic table of a scaling proportion of a waveform when the target element is 2×2 according to an embodiment of this application. Four waveforms are used as an example for description.

**Table 2 Schematic table of a scaling proportion of a waveform when a target element is 2×2**

| Size of a target element | Scaling | First waveform | Second waveform | Third waveform | Fourth waveform |
|---|---|---|---|---|---|
| 2×2 | Scale down | 95% | 97% | 98% | 99.5% |
| | Scale up | 104% | 102% | 101% | 100.5% |

For any waveform in Table 1 and Table 2, a scaling difference of the first waveform of the 1×1 target element in Table 1 may be 7%, and a scaling difference of the first waveform of the 2×2 target element in Table 2 may be 9%. Therefore, a larger size of the target element leads to larger amplitude of a waveform and a larger quantity of waveforms.

Based on this, the terminal device can drag the target element to another location when accidentally touching the target element, and when the target element is returned to a target location, the terminal device produces a ripple effect around the target location, so that the user can notice the accidentally touched target element in a timely manner. In addition, a larger size of the target element leads to more obvious amplitude of a waveform in the ripple effect.

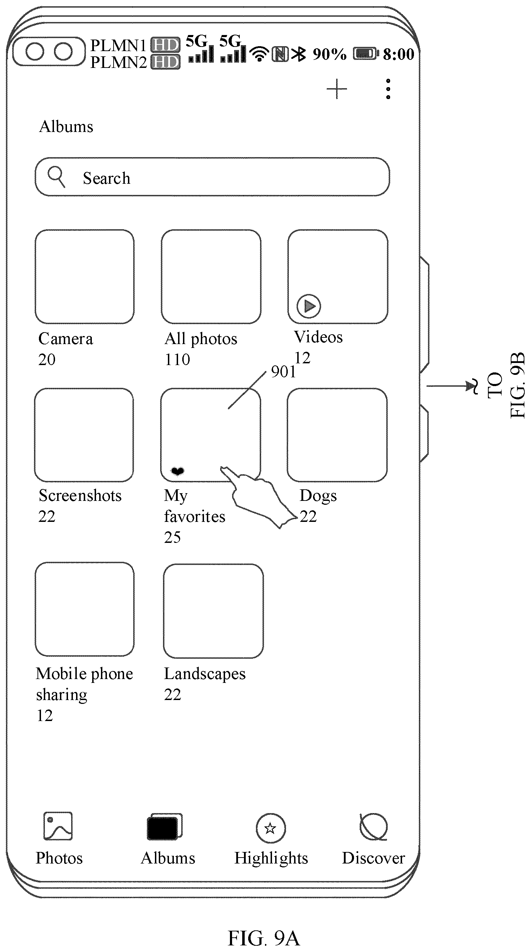

In a possible implementation, when the 2×2 target element is an album icon in a gallery application, the terminal device may also implement a ripple effect based on the album icon. For example, FIG. 9A to FIG. 9F are a schematic diagram of an interface in which a ripple effect is triggered based on an album icon according to an embodiment of this application.

When the terminal device receives an operation that the user opens a gallery application, the terminal device may display an interface shown in FIG. 9A. The interface may include a text box used to search for an album, a control used to create an album, a control used to view another function in a camera application, a control used to view a photo, a control used to view an album (the control used to view an album is in a selected state), a control used to view photos based on a time dimension, a control used to view photos based on an album category, and a plurality of albums. The album may include a Camera album that includes 20 images, an All photos album that includes 110 images, a Videos album that includes 12 videos, a Screenshots album that includes 22 images, a My favorites album 901 (which is alternatively referred to as a target element 901) that includes 25 images, a Dogs album that includes 22 images, a Mobile phone sharing album that includes 12 images, and a Landscapes album that includes 22 images.

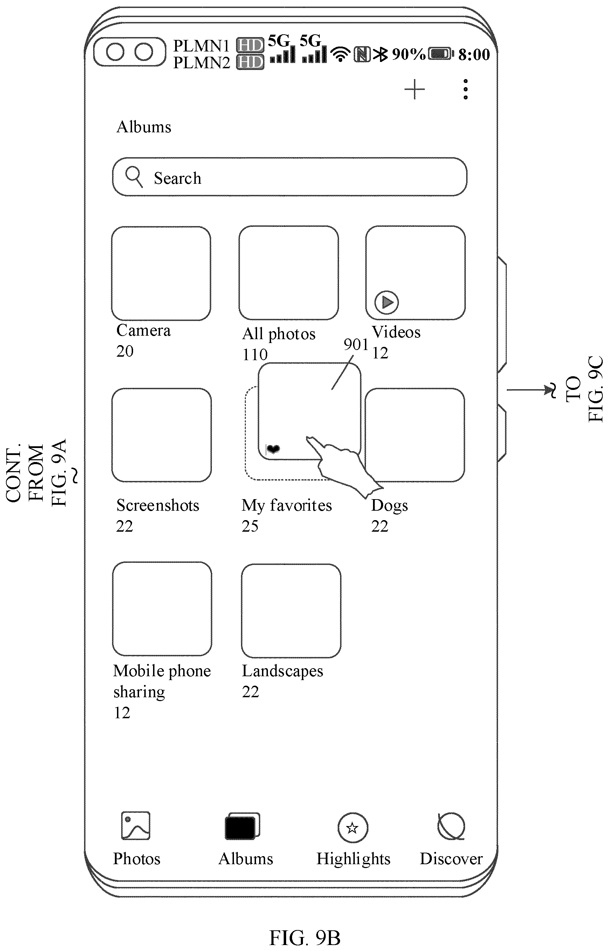

In the interface shown in FIG. 9A, when the terminal device receives a touch and hold operation performed by the user on the target element 901, the terminal device may highlight the target element 901. If a pressing operation is continuously located on the target element 901, when the terminal device receives an operation that the user drags the target element 901, the terminal device may display an interface shown in FIG. 9B. In the interface shown in FIG. 9B, the target element 901 in the interface may keep in a highlighted state, and a dashed-line box is displayed at a start location from which the target element 901 is dragged.

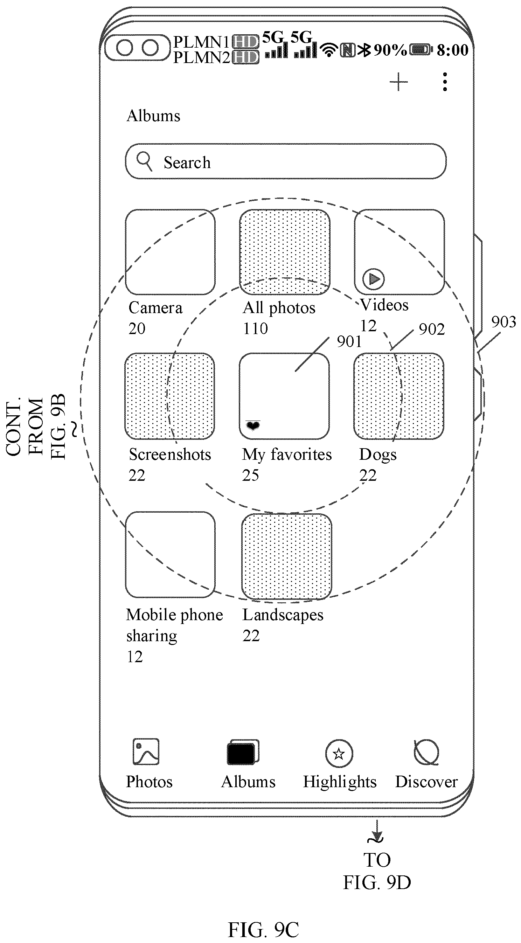

If the target element 901 is located at a location in the interface shown in FIG. 9B, when the terminal device receives an operation that the user releases a finger, the terminal device may place the target element 901 at a location of the dashed-line box, and display an interface shown in FIG. 9C. In the interface shown in FIG. 9C, highlighting of the target element 901 is canceled, and the target element 901 is restored to a display status and a size in the interface shown in FIG. 9A.

Based on the interface shown in FIG. 9C, the terminal device may separately scale elements corresponding to a first range 902 around the target element 901, elements corresponding to a second range 903, and the like, so that an album icon in the interface shown in FIG. 9C may present a ripple effect around the target element 901.

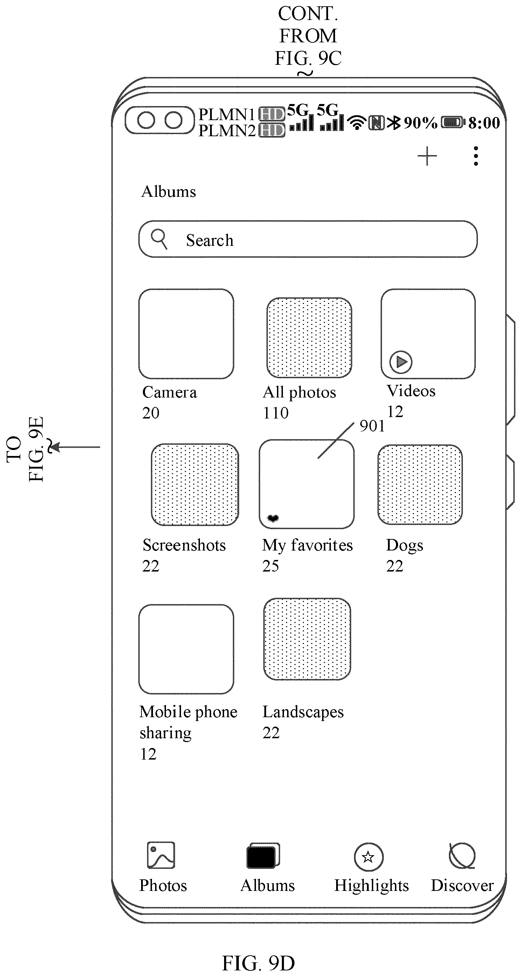

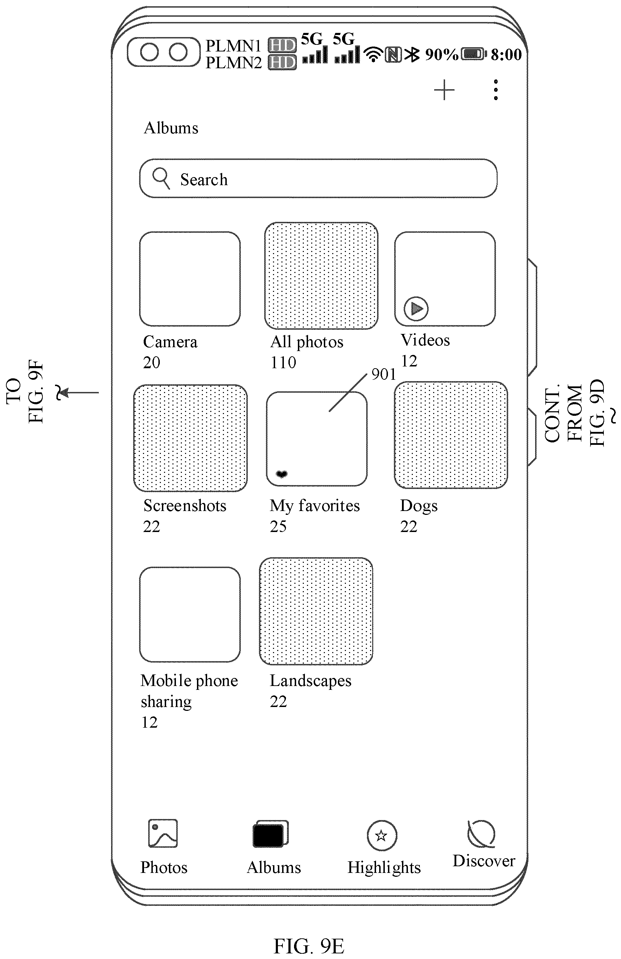

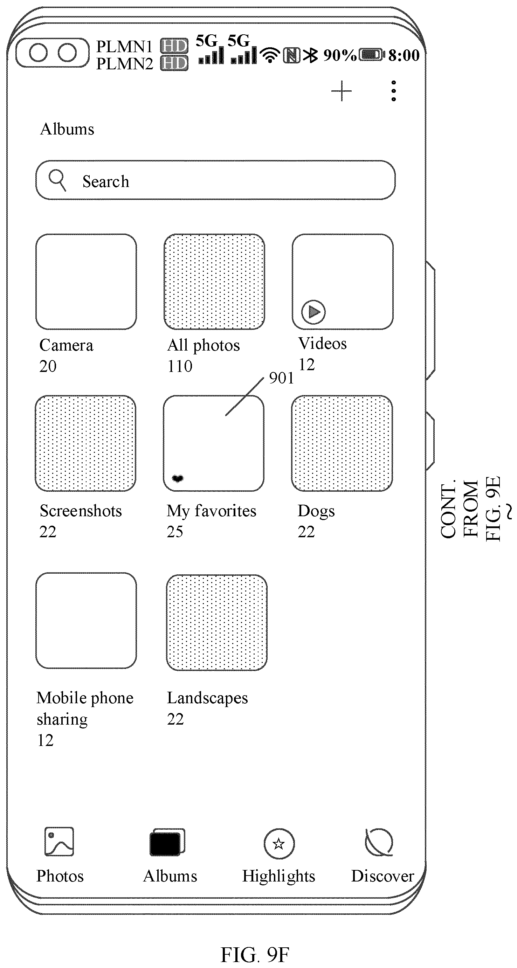

For example, in the interface shown in FIG. 9C, the terminal device may scale down an element corresponding to the first range 902, so that the terminal device displays an interface shown in FIG. 9D. Further, in the interface shown in FIG. 9D, the terminal device may scale up the scaled-down element corresponding to the first range 902, so that the terminal device displays an interface shown in FIG. 9E. Further, in the interface shown in FIG. 9E, the scaled-up element corresponding to the first range 902 is scaled down, so that the terminal device displays an interface shown in FIG. 9F, and the element is returned to an original size of the element corresponding to the first range 902 in the interface shown in FIG. 9A.

Further, after 50 ms after scaling processing is performed on the element corresponding to the first range 902, the terminal device may perform scaling processing on an element corresponding to the second range 903. In addition, for a method used by the terminal device to perform scaling processing on the element corresponding to the second range 903, refer to descriptions in the interface shown in FIG. 9C to an interface shown in FIG. 9F. Details are not described herein again.

It may be understood that each element corresponding to the first range 902 in the embodiment corresponding to FIG. 9A to FIG. 9F is an element with a size of 2×2. Therefore, a quantity of elements affected in a scaling processing process may be different from a quantity of elements corresponding to the first range 802 in the interface shown in FIG. 8C. In addition, a size of each element in the embodiment corresponding to FIG. 9A to FIG. 9F also enables only two waveforms to be formed around the target element whose size is 2×2 in the interface shown in FIG. 9C.

It may be understood that a size of the first range 902 may be the same as a size of the first range 802, and a size of the second range 903 may be the same as a size of the second range 803.

In a possible implementation, when the 2×2 target element is a photo icon in a gallery application, the terminal device may also implement a ripple effect based on the photo icon, and the ripple effect is similar to the ripple effect of the album icon in the embodiment corresponding to FIG. 9A to FIG. 9F, and details are not described herein again.

Scenario 3: When the target element is a 2×4 card, card set, widget, or the like, the terminal device may perform scaling processing on elements around the target element when receiving the target operation of the user, so that a ripple effect of a relatively large range (for example, four or five waveforms are generated around the 2×4 element) is produced for the elements around the target element.

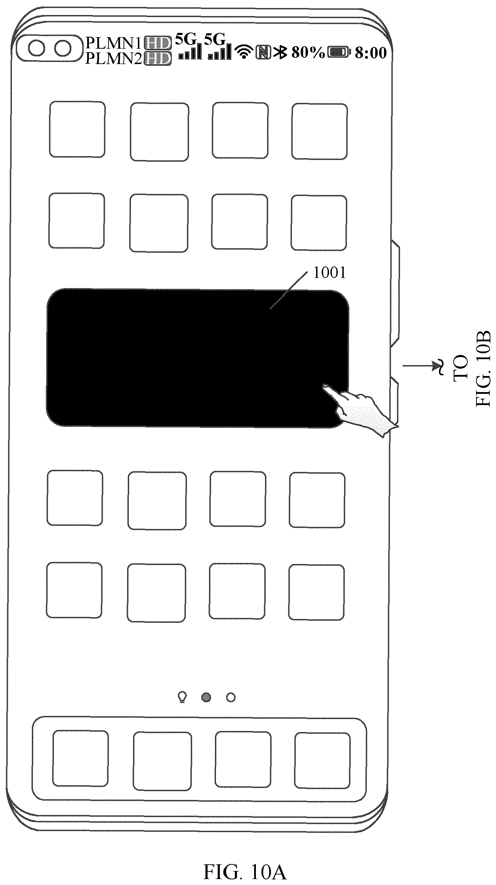

For example, FIG. 10A to FIG. 10C are a schematic diagram of yet another interface in which a ripple effect is triggered according to an embodiment of this application.

The terminal device displays an interface shown in FIG. 10A, and the interface may include a card 1001 (which is alternatively referred to as a target element 1001).

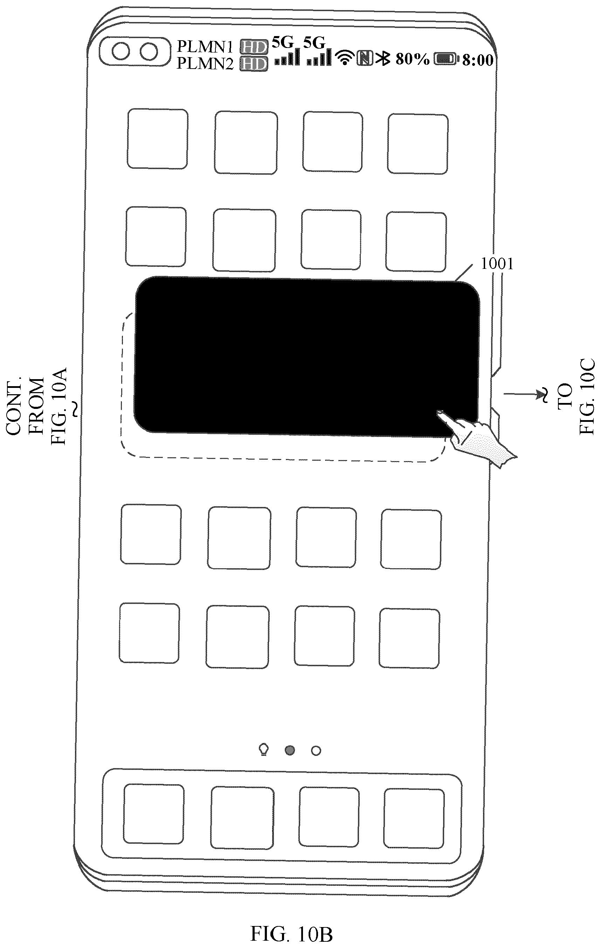

In the interface shown in FIG. 10A, when the terminal device receives a touch and hold operation performed by the user on the target element 1001, the terminal device may highlight the target element 1001. If a pressing operation is continuously located on the target element 1001, when the terminal device receives an operation that the user drags the target element 1001, the terminal device may display an interface shown in FIG. 10B. In the interface shown in FIG. 10B, the target element 1001 in the interface may keep in a highlighted state, and a 2×4 dashed-line box is displayed at a start location from which the target element 1001 is dragged.

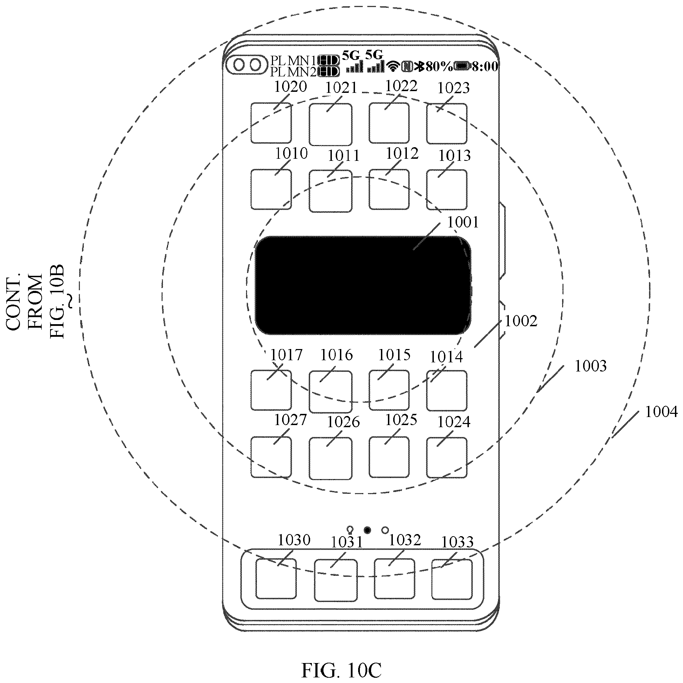

If the target element 1001 is located at a location in the interface shown in FIG. 10B, when the terminal device receives an operation that the user releases a finger, the terminal device may place the target element 1001 at a location of the dashed-line box, and display an interface shown in FIG. 10C. In the interface shown in FIG. 10C, highlighting of the target element 1001 is canceled, and the target element 1001 is restored to a display status and a size in the interface shown in FIG. 10A are restored.

It may be understood that, in the interface shown in FIG. 10C, the terminal device may successively scale elements around the target element 1001 in a direction from the inside to the outside by using the target element 1001 as a center, thereby presenting a ripple effect. For example, the terminal device may preferentially scale elements corresponding to a first range 1002, and the elements corresponding to the first range 1002 may include an element 1010, an element 1011, an element 1012, an element 1013, an element 1014, an element 1015, an element 1016, and an element 1017.

After a time period threshold after scaling processing is performed on the elements corresponding to the first range 1002, the terminal device may perform scaling processing on elements corresponding to a second range 1003, and the elements corresponding to the second range 1003 may include an element 1020, an element 1021, an element 1022, an element 1023, an element 1024, an element 1025, an element 1026, and an element 1027.

After a time period threshold after scaling processing is performed on the elements corresponding to the second range 1003, the terminal device may perform scaling processing on elements corresponding to a third range 1004, and the elements corresponding to the third range 1004 may include an element 1030, an element 1031, an element 1032, and an element 1033. All the element 1030, the element 1031, the element 1032, and the element 1033 may be elements in a dock bar.

It may be understood that the first range 1002, the second range 1003, and the third range 1004 may form three waveforms. In a possible implementation, the terminal device may alternatively set five waveforms for the 2×4 target element. For example, Table 3 is a schematic table of a scaling proportion of a waveform when the target element is 2×4 according to an embodiment of this application. Five waveforms are used as an example for description.

**Table 3 Schematic table of a scaling proportion of a waveform when a target element is 2×4**

| Size of a target element | Scaling | First waveform | Second waveform | Third waveform | Fourth waveform | Fifth waveform |
|---|---|---|---|---|---|---|
| 2×4 | Scale down | 93% | 96% | 97% | 98% | 99.5% |
| | Scale up | 105% | 103% | 102% | 101% | 100.5% |

For any waveform in Table 1, Table 2, and Table 3, a scaling difference of the first waveform of the 1×1 target element in Table 1 may be 7%, a scaling difference of the first waveform of the 2×2 target element in Table 2 may be 9%, and a scaling difference of the first waveform of the 2×4 target element in Table 3 may be 12%. Therefore, a larger size of the target element leads to larger amplitude of a waveform.

It may be understood that values of waveform scaling in Table 1, Table 2, and Table 3 are merely examples, and cannot constitute a limitation on this embodiment of this application.

Based on this, the terminal device can drag the target element to another location when accidentally touching the target element, and when the target element is returned to a target location, the terminal device produces a ripple effect around the target location, so that the user can notice the accidentally touched target element in a timely manner. In addition, a larger size of the target element leads to more obvious amplitude of a waveform in the ripple effect.

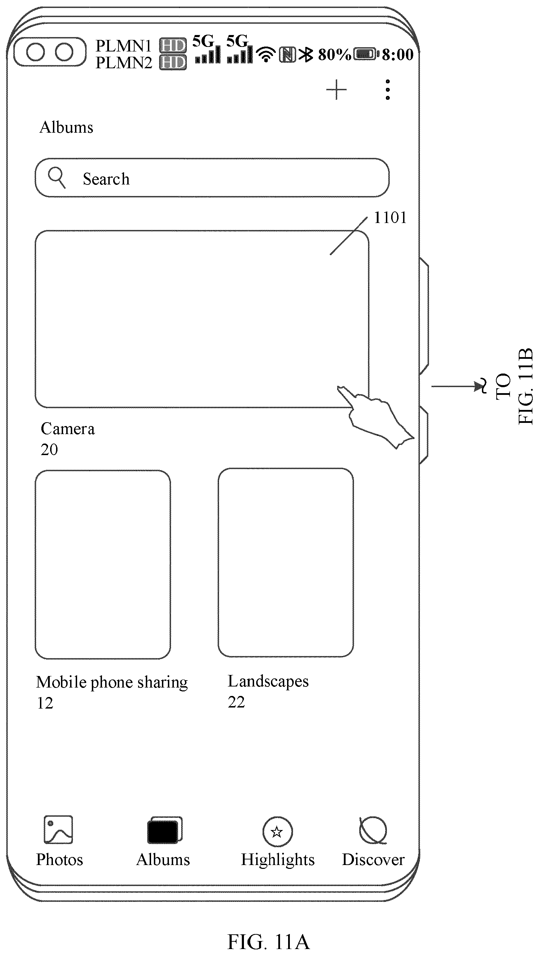

In a possible implementation, when the 2×4 target element is an album icon in a gallery application, the terminal device may also implement a ripple effect based on the album icon. For example, FIG. 11A to FIG. 11F are a schematic diagram of an interface in which a ripple effect is triggered based on an album icon according to an embodiment of this application.

The terminal device displays an interface shown in FIG. 11A, and the interface may be another display style of an album. The interface may include a Camera album (which is alternatively referred to as a target element 1001) that includes 20 photos, a Mobile phone sharing album that includes 12 photos, and a Landscapes album that includes 22 photos. For other content displayed in the interface, refer to descriptions in the interface shown in FIG. 9A. Details are not described herein again. Both a size of the Mobile phone sharing album and a size of the Landscapes album may be 2×3.

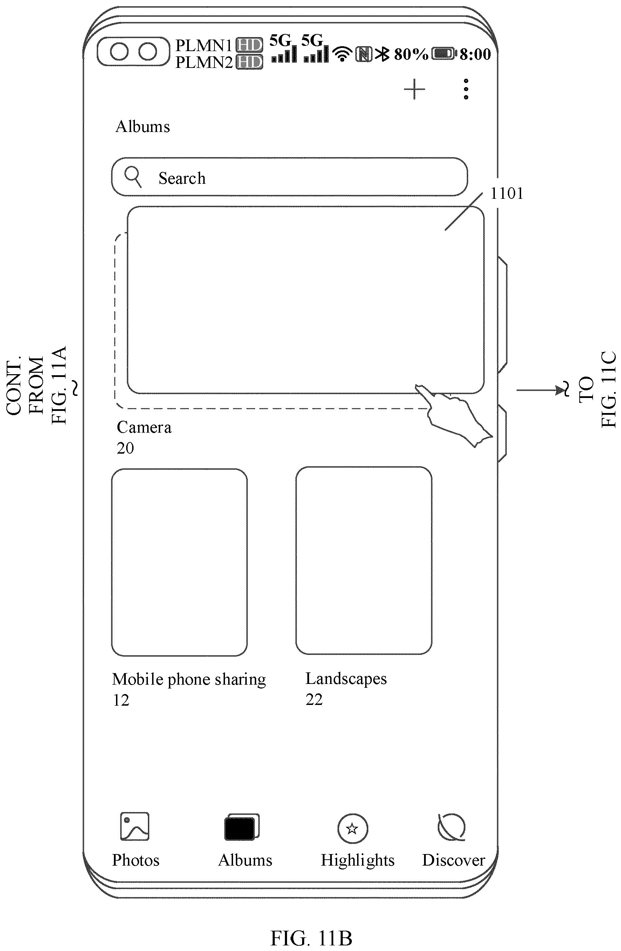

In the interface shown in FIG. 11A, when the terminal device receives a touch and hold operation performed by the user on the target element 1101, the terminal device may highlight the target element 1101. If a pressing operation is continuously located on the target element 1101, when the terminal device receives an operation that the user drags the target element 1101, the terminal device may display an interface shown in FIG. 11B. In the interface shown in FIG. 11B, the target element 1101 in the interface may keep in a highlighted state, and a dashed-line box is displayed at a start location of the target element 1101.

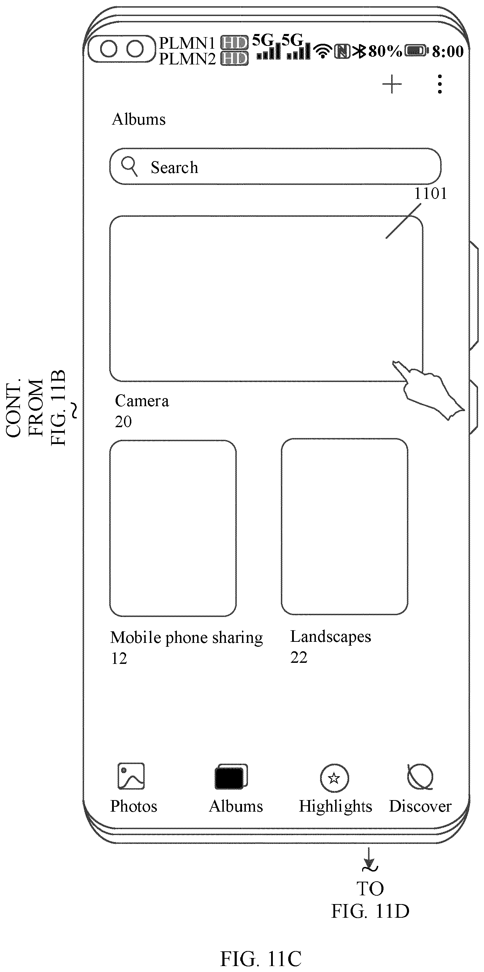

If the target element 1101 is located at a location in the interface shown in FIG. 11B, when the terminal device receives an operation that the user releases a finger, the terminal device may place the target element 1101 at a location of the dashed-line box, and display an interface shown in FIG. 11C. In the interface shown in FIG. 11C, highlighting of the target element 1101 is canceled, and the target element 1101 is restored to a display status and a size in the interface shown in FIG. 11A.

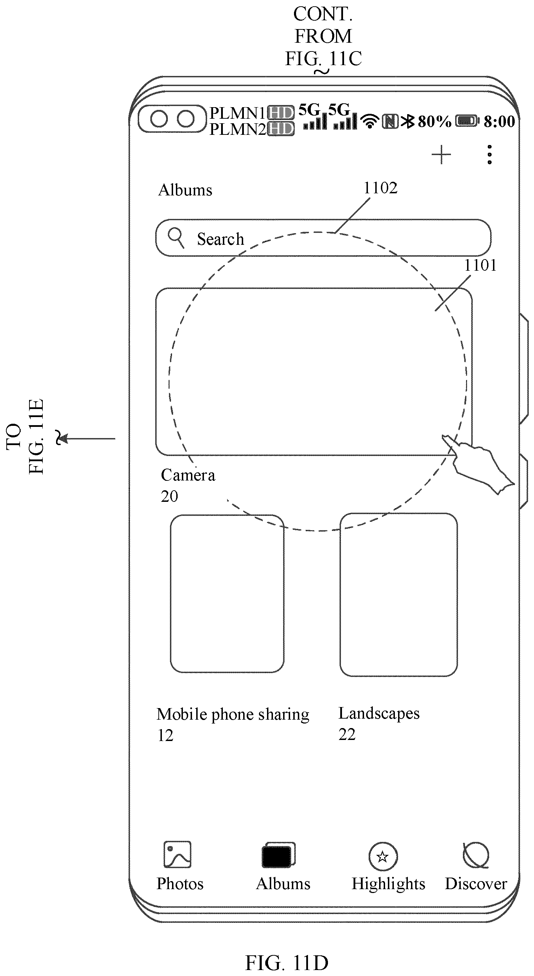

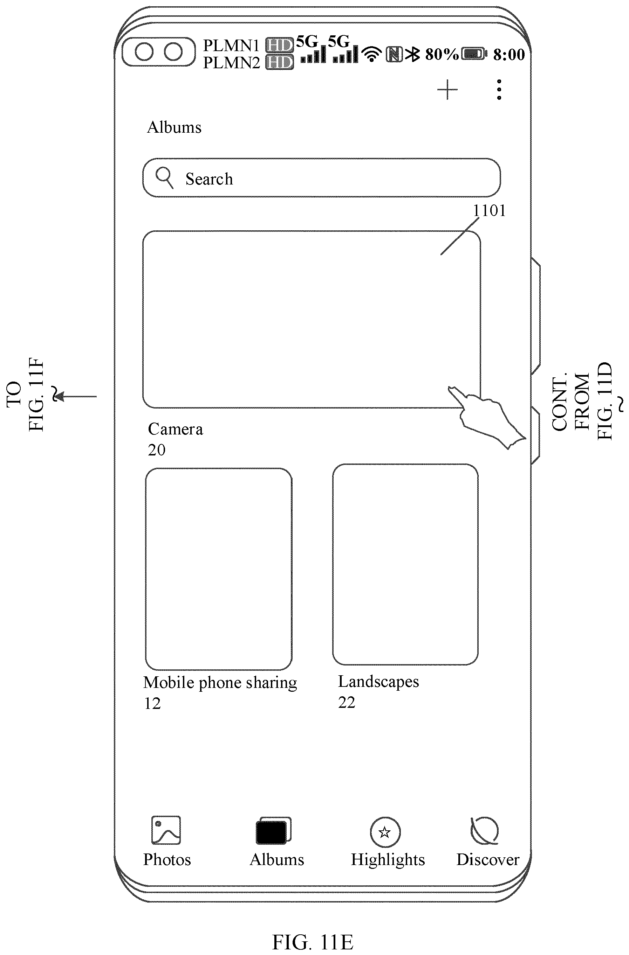

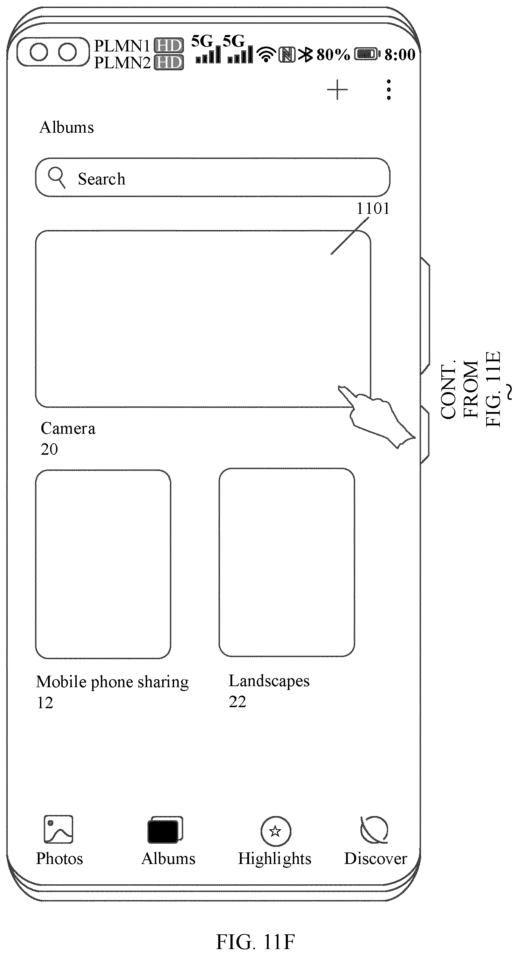

Based on the interface shown in FIG. 11C, the terminal device may scale elements corresponding to a first range 1102 around the target element 1101, so that an album icon in the interface shown in FIG. 11C may present a ripple effect around the target element 1101. For example, in the interface shown in FIG. 11C, the terminal device may scale down the elements corresponding to the first range 1102, so that the terminal device displays an interface shown in FIG. 11D. Further, in the interface shown in FIG. 11D, the terminal device may scale up the scaled-down elements corresponding to the first range 1102, so that the terminal device displays an interface shown in FIG. 11E. Further, in the interface shown in FIG. 11E, the terminal device may scale down the scaled-up elements corresponding to the first range 1102, so that the terminal device displays an interface shown in FIG. 11F, and the elements are returned to original sizes of the elements corresponding to the first range 1102. The elements corresponding to the first range 1102 may be a Mobile phone sharing album and a Landscapes album.

It may be understood that each element corresponding to the first range 1102 in the embodiment corresponding to FIG. 11A to FIG. 11F is an element whose size is 2×3. Therefore, a quantity of elements affected in a scaling processing process may be different from a quantity of elements corresponding to the first range 1002 in the interface shown in FIG. 10C, and a size of the first range 1102 may be the same as a size of the first range 1002. In addition, another element whose size is 2×3 around the target element 1101 in the embodiment corresponding to FIG. 11A to FIG. 11F enables an element whose size is 2×4 in the interface shown in FIG. 11C to form one waveform.

It may be understood that the interface display method provided in embodiments of this application may be applied not only to a scenario such as a home screen, a folder, or an album, but also to another scenario including a plurality of elements. This is not limited in embodiments of this application.

It may be understood that the interfaces described in embodiments of this application are merely examples, and cannot constitute a limitation on embodiments of this application.

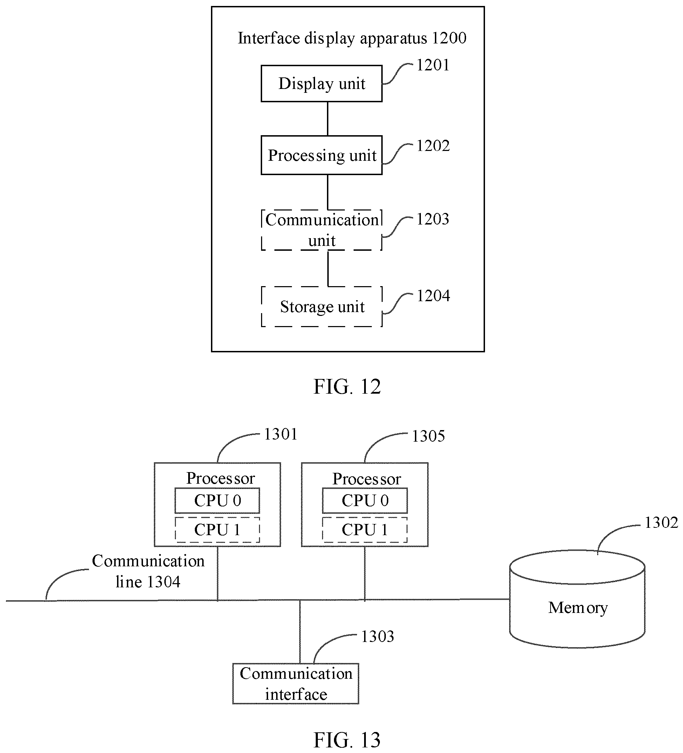

The method provided in embodiments of this application is described above with reference to FIG. 3A to FIG. 3E-FIG. 11A to FIG. 11F. An apparatus for performing the method in embodiments of this application is described below. FIG. 12 is a schematic diagram of a structure of an interface display apparatus according to an embodiment of this application. The interface display apparatus may be the terminal device in embodiments of this application, or may be a chip or a chip system in the terminal device.

As shown in FIG. 12, an interface display apparatus 1200 may be applied to a communication device, a circuit, a hardware component, or a chip, and the interface display apparatus includes a display unit 1201 and a processing unit 1202. The display unit 1201 is configured to support a display step performed by the interface display apparatus 1200. The processing unit 1202 is configured to support the interface display apparatus 1200 in performing an information processing step.

Specifically, an embodiment of this application provides an interface display apparatus 1200. The interface display apparatus includes a processing unit 1202 and a display unit 1201. The display unit 1201 is configured to display a first interface, where the first interface includes a plurality of elements. The processing unit 1202 is configured to receive a first operation for a target element in the plurality of elements. In response to the first operation, the processing unit 1202 is configured to move the target element from a first location to a second location. The display unit 1201 is configured to scale down and/or scale up a first layer of elements around the second location in the plurality of elements for display.

In a possible implementation, the display unit 1201 is further configured to scale down and/or scale up a second layer of elements around the second location in the plurality of elements for display. The second layer of elements and the first layer of elements are all elements centered on the second location, and the second layer of elements are elements on an outer side of the first layer of elements.

In a possible implementation, the display unit 1201 is specifically configured to scale down and/or scale up the second layer of elements for display after a first time threshold after the first layer of elements are scaled down and/or scaled down for display.

In embodiments, a scaling down proportion to which the second layer of elements are scaled down for display is greater than a scaling down proportion to which the first layer of elements are scaled down for display, and a scaling up proportion to which the second layer of elements are scaled up for display is less than a scaling up proportion to which the first layer of elements are scaled up for display.

In a possible implementation, the display unit 1201 is further configured to scale down and/or scale up an N^{th} layer of elements around the second location in the plurality of elements for display, where the N^{th} layer of elements and the second layer of elements are all elements centered on the second location, the N^{th} layer of elements are elements on an outer side of the second layer of elements, and N is greater than 2.

In a possible implementation, when an M^{th} layer of elements include an element in a dock bar, the display unit 1201 is further configured to scale down and/or scale up the element in the dock bar for display, where M is less than or equal to N.

In a possible implementation, a scaling down proportion to which the N^{th} layer of elements are scaled down for display is greater than a scaling down proportion to which the second layer of elements are scaled down for display, and a scaling up proportion to which the N^{th} layer of elements are scaled up for display is less than a scaling up proportion to which the second layer of elements are scaled up for display.

In a possible implementation, the processing unit 1202 is specifically configured to scale down the first layer of elements at a first moment, and the display unit 1201 is specifically configured to display the scaled-down first layer of elements. The processing unit 1202 is specifically configured to scale up the scaled-down first layer of elements at a second moment, and the display unit 1201 is specifically configured to: display the scaled-up first layer of elements, scale down the scaled-up first layer of elements at a third moment, and display the first layer of elements.

In a possible implementation, a size of the scaled-down first layer of elements is less than a size of the first layer of elements, and a size of the scaled-up first layer of elements is greater than the size of the first layer of elements.

In a possible implementation, the display unit 1201 is specifically configured to inwardly scale down and/or outwardly scale up the first layer of elements around the second location in the plurality of elements for display by using the second location as a center.

In a possible implementation, in response to the first operation, the processing unit 1202 is specifically configured to scale down the target element, and the display unit 1201 is specifically configured to display the scaled-down target element. If the first operation continuously acts on the target element, the processing unit 1202 is specifically configured to scale up the scaled-down target element, and the display unit 1201 is specifically configured to display the scaled-up target element. The processing unit 1202 is specifically configured to move the scaled-up target element from the first location to the second location.

In a possible implementation, when it is determined that there is a first element at the second location in a process in which the terminal device moves the scaled-up target element from the first location to the second location, the processing unit 1202 is specifically configured to: move the first element to a third location, and move the scaled-up target element from the first location to the second location.

In a possible implementation, a size of the target element is positively correlated with a quantity of layers around the second location in the plurality of elements.

In a possible implementation, the size of the target element is positively correlated with a range covered by the first layer.

In a possible implementation, the target element is an element in a folder; the processing unit 1202 is specifically configured to receive a second operation for the folder; and in response to the second operation, the display unit 1201 is specifically configured to display the first interface.

In a possible implementation, the target element includes an application icon, a card, a widget, a folder, a card set, an image icon, or an album icon. In a possible implementation, the interface display apparatus 1200 may also include a communication unit 1203. Specifically, the communication unit is configured to support the interface display apparatus 1200 in performing a data sending step and a data receiving step. For example, the communication unit 1203 may be an input or output interface, a pin, a circuit, or the like.

In a possible embodiment, the interface display apparatus may further include a storage unit 1204. The processing unit 1202 and the storage unit 1204 are connected to each other by using a line. The storage unit 1204 may include one or more memories, and the memory may be one or more components that are in a device or a circuit and that are configured to store programs or data. The storage unit 1204 may exist independently, and is connected to the processing unit 1202 of the interface display apparatus by using a communication line. Alternatively, the storage unit 1204 may be integrated into the processing unit 1202.

The storage unit 1204 may store computer-executable instructions of the method in a terminal device, so that the processing unit 1202 performs the method in the foregoing embodiments. The storage unit 1204 may be a register, a cache, a RAM, or the like, and the storage unit 1204 may be integrated into the processing unit 1202. The storage unit 1204 may be a read-only memory (read-only memory, ROM) or another type of static storage device that may store static information and instructions. The storage unit 1204 may be independent of the processing unit 1202.

FIG. 13 is a schematic diagram of a hardware structure of another terminal device according to an embodiment of this application. As shown in FIG. 13, the terminal device includes a processor 1301, a communication line 1304, and at least one communication interface (a communication interface 1303 is used as an example for description in FIG. 13).

The processor 1301 may be a general-purpose central processing unit (central processing unit, CPU), a microprocessor, an application-specific integrated circuit (application-specific integrated circuit, ASIC), or one or more integrated circuits for controlling program execution in the solutions of this application.

The communication line 1304 may include a circuit for transmitting information between the foregoing components.

The communication interface 1303 uses any apparatus such as a transceiver to communicate with another device or a communication network, such as an Ethernet or a wireless local area network (wireless local area network, WLAN).

Possibly, the terminal device may further include a memory 1302.

The memory 1302 may be a read-only memory (read-only memory, ROM) or another type of static storage device capable of storing static information and instructions, a random access memory (random access memory, RAM) or another type of dynamic storage device capable of storing information and instructions, or an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in the form of instructions or data structures and that can be accessed by a computer, but is not limited thereto. The memory may exist independently, and is connected to the processor by using the communication line 1304. The memory may be alternatively integrated into the processor.

The memory 1302 is configured to store computer-executable instructions for performing the solution in this application, and the processor 1301 controls execution. The processor 1301 is configured to execute the computer-executable instructions stored in the memory 1302, to implement the interface display method provided in embodiments of this application.

Possibly, the computer-executable instructions in this embodiment of this application may also be referred to as application program code. This is not specifically limited in the embodiments of this application.

During specific implementation, in an embodiment, the processor 1301 may include one or more CPUs, such as a CPU 0 and a CPU 1 in FIG. 13.

During specific implementation, in an embodiment, the terminal device may include a plurality of processors, such as a processor 1301 and a processor 1305 in FIG. 13. Each of these processors may be a single-core (single-CPU) processor or a multi-core (multi-CPU) processor. The processor herein may be one or more devices, circuits, and/or processing cores configured to process data (for example, computer program instructions).

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium accessible by the computer, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. The method described in the foregoing embodiments may be completely or partially implemented by using software, hardware, firmware, or any combination thereof. The computer-readable medium may include a computer storage medium and a communication medium, and may further include any medium that enables a computer program to be transmitted from one place to another place. The storage medium may be any target medium accessible by the computer.

In a possible design, the computer-readable medium may include a compact disc read-only memory (compact disc read-only memory, CD-ROM), a RAM, a ROM, an EEPROM, or another optical disc memory; or the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or wireless technologies (for example, infrared, radio, and microwave), the coaxial cable, the optical fiber cable, the twisted pair, the DSL, or the wireless technologies such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc. The magnetic disk usually reproduces data in a magnetic manner, and the optical disc reproduces data optically by using laser.

The foregoing combinations should also be included in the scope of the computer-readable medium. The foregoing descriptions are merely specific implementations of the present invention. However, the protection scope of the present invention is not limited thereto. Any change readily figured out by a person skilled in the art within the technical scope of the claims shall fall within the protection scope of the present invention. Therefore, the protection scope of the present invention is defined by the protection scope of the claims.

## Claims

1. An interface display method, wherein the method comprises:
displaying, by a terminal device, a first interface, wherein the first interface comprises a plurality of elements;
receiving, by the terminal device, a first operation for a target element (301) in the plurality of elements (310 - 313, 320 - 323, 324, 330 - 337);
moving, by the terminal device, the target element from a first location to a second location in response to the first operation;
scaling down and/or scaling up, by the terminal device, a first layer of elements (310 - 313) around the second location in the plurality of elements; and
scaling down and/or scaling up, by the terminal device, a second layer of elements (320 - 324) for display after a first time threshold after the terminal device scales down and/or scales up the first layer of elements for display;
the method **characterised in that** a scaling down proportion to which the second layer of elements (320 - 324) are scaled down for display is greater than a scaling down proportion to which the first layer of elements (310 - 313) are scaled down for display, and a scaling up proportion to which the second layer of elements are scaled up for display is less than a scaling up proportion to which the first layer of elements are scaled up for display.

2. The method according to claim 1, wherein the method further comprises:
scaling down and/or scaling up, by the terminal device, an N^{th} layer of elements (330 - 337) around the second location in the plurality of elements for display, wherein the N^{th} layer of elements and the second layer of elements (320 - 324) are all elements centered on the second location, the N^{th} layer of elements are elements on an outer side of the second layer of elements, and N is greater than 2.

3. The method according to claim 2, wherein the method further comprises:
when an M^{th} layer of elements comprises an element in a dock bar, scaling down and/or scaling up, by the terminal device, the element in the dock bar for display, wherein M is less than or equal to N.

4. The method according to claim 2 or 3, wherein a scaling down proportion to which the N^{th} layer of elements (330 - 337) are scaled down for display is greater than a scaling down proportion to which the second layer of elements (320 - 324) are scaled down for display, and a scaling up proportion to which the N^{th} layer of elements are scaled up for display is less than a scaling up proportion to which the second layer of elements are scaled up for display.

5. The method according to any one of claims 1-4, wherein the scaling down and/or scaling up, by the terminal device, a first layer of elements (310 - 313) around the second location in the plurality of elements (310 - 313, 320 - 323, 324, 330 - 337) for display comprises:
scaling down, by the terminal device, the first layer of elements at a first moment, and displaying the scaled-down first layer of elements;
scaling up, by the terminal device, the scaled-down first layer of elements at a second moment, and displaying the scaled-up first layer of elements; and
scaling down, by the terminal device, the scaled-up first layer of elements at a third moment, and displaying the first layer of elements.

6. The method according to claim 5, wherein a size of the scaled-down first layer of elements (310 - 313) is less than a size of the first layer of elements, and a size of the scaled-up first layer of elements is greater than the size of the first layer of elements.

7. The method according to claim 5 or 6, wherein the scaling down and/or scaling up, by the terminal device, a first layer of elements (310 - 313) around the second location in the plurality of elements (310 - 313, 320 - 323, 324, 330 - 337) for display comprises:
inwardly scaling down and/or outwardly scaling up, by the terminal device, the first layer of elements around the second location in the plurality of elements for display by using the second location as a center.

8. The method according to any one of claims 1-7, wherein the moving, by the terminal device, the target element (301) from a first location to a second location in response to the first operation comprises:
in response to the first operation, scaling down, by the terminal device, the target element, and displaying the scaled-down target element;
if the first operation continuously acts on the target element, scaling up, by the terminal device, the scaled-down target element, and displaying the scaled-up target element; and
moving, by the terminal device, the scaled-up target element from the first location to the second location.

9. The method according to claim 8, wherein the moving, by the terminal device, the scaled-up target element (301) from the first location to the second location comprises:
when it is determined that there is a first element at the second location in a process in which the terminal device moves the scaled-up target element from the first location to the second location, moving, by the terminal device, the first element to a third location, and moving the scaled-up target element from the first location to the second location.

10. The method according to any one of claims 1-9, wherein a size of the target element is positively correlated with a quantity of layers around the second location in the plurality of elements (310 - 313, 320 - 323, 324, 330 - 337), and the size of the target element is positively correlated with a range covered by the first layer.

11. The method according to any one of claims 1-10, wherein the target element (502) is an element in a folder (501), and the method further comprises:
receiving, by the terminal device, a second operation for the folder; and
the displaying, by a terminal device, a first interface comprises: displaying, by the terminal device, the first interface in response to the second operation.

12. The method according to any one of claims 1-11, wherein the target element (301) comprises an application icon, a card (801, 1001), a widget, a folder (501), a card set, an image icon, or an album icon.

13. A terminal device, comprising:
one or more processors (110);
one or more memories (121); and
a module at which a plurality of applications are installed, wherein
the memory stores one or more programs, and when the one or more programs are executed by the processor, the electronic device is enabled to perform the following steps:
displaying, by a terminal device, a first interface, wherein the first interface comprises a plurality of elements (310 - 313, 320 - 323, 324, 330 - 337);
receiving, by the terminal device, a first operation for a target element (301) in the plurality of elements;
moving, by the terminal device, the target element from a first location to a second location in response to the first operation;
scaling down and/or scaling up, by the terminal device, a first layer of elements (310 - 313) around the second location in the plurality of elements; and
scaling down and/or scaling up, by the terminal device, a second layer of elements (320 - 324) for display after a first time threshold after the terminal device scales down and/or scales up the first layer of elements for display;
the terminal device **characterised in that** a scaling down proportion to which the second layer of elements (320 - 324) are scaled down for display is greater than a scaling down proportion to which the first layer of elements (310 - 313) are scaled down for display, and a scaling up proportion to which the second layer of elements are scaled up for display is less than a scaling up proportion to which the first layer of elements are scaled up for display.

14. A computer-readable storage medium (121), comprising
a computer program, which when executed by a processor (110), cause the processor to perform operations comprising:
displaying, by a terminal device, a first interface, wherein the first interface comprises a plurality of elements (310 - 313, 320 - 323, 324, 330 - 337);
receiving, by the terminal device, a first operation for a target element (301) in the plurality of elements;
moving, by the terminal device, the target element from a first location to a second location in response to the first operation;
scaling down and/or scaling up, by the terminal device, a first layer of elements (310 - 313) around the second location in the plurality of elements; and
scaling down and/or scaling up, by the terminal device, a second layer of elements (320 - 324) for display after a first time threshold after the terminal device scales down and/or scales up the first layer of elements for display;
the computer-readable storage medium **characterised in that** a scaling down proportion to which the second layer of elements (320 - 324) are scaled down for display is greater than a scaling down proportion to which the first layer of elements (310 - 313) are scaled down for display, and a scaling up proportion to which the second layer of elements are scaled up for display is less than a scaling up proportion to which the first layer of elements are scaled up for display.

## Patentansprüche

1. Verfahren zur Schnittstellenanzeige, wobei das Verfahren umfasst:
Anzeigen einer ersten Schnittstelle durch ein Endgerät, wobei die erste Schnittstelle eine Vielzahl von Elementen umfasst;
Empfangen eines ersten Vorgangs für ein Zielelement (301) aus der Vielzahl von Elementen (310 - 313, 320 - 323, 324, 330 - 337) durch das Endgerät;
Bewegen des Zielelements von einem ersten Ort zu einem zweiten Ort durch das Endgerät in Reaktion auf den ersten Vorgang;
Verkleinern und/oder Vergrößern einer ersten Schicht von Elementen (310 - 313) um den zweiten Ort in der Vielzahl von Elementen durch das Endgerät; und
Verkleinern und/oder Vergrößern einer zweiten Schicht von Elementen (320 - 324) zur Anzeige nach einer ersten Zeitschwelle, nachdem das Endgerät die erste Schicht von Elementen zur Anzeige verkleinert und/oder vergrößert hat, durch das Endgerät;
wobei das Verfahren **dadurch gekennzeichnet ist, dass** ein Verkleinerungsverhältnis, auf das die zweite Schicht von Elementen (320 - 324) zur Anzeige verkleinert wird, größer ist als ein Verkleinerungsverhältnis, auf das die erste Schicht von Elementen (310 - 313) zur Anzeige verkleinert wird, und ein Vergrößerungsverhältnis, auf das die zweite Schicht von Elementen zur Anzeige vergrößert wird, kleiner ist als ein Vergrößerungsverhältnis, auf das die erste Schicht von Elementen zur Anzeige vergrößert wird.

2. Verfahren nach Anspruch 1, wobei das Verfahren ferner umfasst:
Verkleinern und/oder Vergrößern einer N^{ten} Schicht von Elementen (330 - 337) um den zweiten Ort in der Vielzahl von Elementen zur Anzeige durch das Endgerät, wobei die N^{te} Schicht von Elementen und die zweite Schicht von Elementen (320 - 324) allesamt Elemente sind, die um den zweiten Ort zentriert sind, die N^{te} Schicht von Elementen Elemente auf einer äußeren Seite der zweiten Schicht von Elementen sind und N größer als 2 ist.

3. Verfahren nach Anspruch 2, wobei das Verfahren ferner umfasst:
wenn eine M^{te} Schicht von Elementen ein Element in einer Dockleiste umfasst, Verkleinern und/oder Vergrößern des Elements in der Dockleiste zur Anzeige durch das Endgerät, wobei M kleiner als oder gleich N ist.

4. Verfahren nach Anspruch 2 oder 3, wobei ein Verkleinerungsverhältnis, auf das die N^{te} Schicht von Elementen (330 - 337) zur Anzeige verkleinert wird, größer ist als ein Verkleinerungsverhältnis, auf das die zweite Schicht von Elementen (320 - 324) zur Anzeige verkleinert wird, und ein Vergrößerungsverhältnis, auf das die N^{te} Schicht von Elementen zur Anzeige vergrößert wird, kleiner ist als ein Vergrößerungsverhältnis, auf das die zweite Schicht von Elementen zur Anzeige vergrößert wird.

5. Verfahren nach einem der Ansprüche 1 bis 4, wobei das Verkleinern und/oder Vergrößern einer ersten Schicht von Elementen (310 - 313) um den zweiten Ort in der Vielzahl von Elementen (310 - 313, 320 - 323, 324, 330 - 337) zur Anzeige durch das Endgerät umfasst:
Verkleinern der ersten Schicht von Elementen durch das Endgerät zu einem ersten Zeitpunkt und Anzeigen der verkleinerten ersten Schicht von Elementen;
Vergrößern der verkleinerten ersten Schicht von Elementen durch das Endgerät zu einem zweiten Zeitpunkt und Anzeigen der vergrößerten ersten Schicht von Elementen; und
Verkleinern der vergrößerten ersten Schicht von Elementen durch das Endgerät zu einem dritten Zeitpunkt und Anzeigen der ersten Schicht von Elementen.

6. Verfahren nach Anspruch 5, wobei eine Größe der verkleinerten ersten Schicht von Elementen (310 - 313) kleiner ist als eine Größe der ersten Schicht von Elementen, und eine Größe der vergrößerten ersten Schicht von Elementen größer ist als die Größe der ersten Schicht von Elementen.

7. Verfahren nach Anspruch 5 oder 6, wobei das Verkleinern und/oder Vergrößern einer ersten Schicht von Elementen (310 - 313) um den zweiten Ort in der Vielzahl von Elementen (310 - 313, 320 - 323, 324, 330 - 337) zur Anzeige durch das Endgerät umfasst:
nach innen gerichtetem Verkleinern und/oder nach außen gerichtetem Vergrößern der ersten Schicht von Elementen um den zweiten Ort in der Vielzahl von Elementen zur Anzeige durch das Endgerät unter Verwendung des zweiten Ortes als Mittelpunkt.

8. Verfahren nach einem der Ansprüche 1 bis 7, wobei das Bewegen des Zielelements (301) von einem ersten Ort zu einem zweiten Ort als Reaktion auf den ersten Vorgang durch das Endgerät umfasst:
als Reaktion auf den ersten Vorgang Verkleinern des Zielelements durch das Endgerät und Anzeigen des verkleinerten Zielelements;
wenn der erste Vorgang kontinuierlich auf das Zielelement einwirkt, Vergrößern des verkleinerten Zielelements durch das Endgerät und Anzeigen des vergrößerten Zielelements; und
Bewegen des vergrößerten Zielelements von dem ersten Ort zu dem zweiten Ort durch das Endgerät.

9. Verfahren nach Anspruch 8, wobei das Bewegen des vergrößerten Zielelements (301) von dem ersten Ort zu dem zweiten Ort durch das Endgerät umfasst:
wenn bestimmt wird, dass an dem zweiten Ort ein erstes Element vorhanden ist, während eines Prozesses, in dem das Endgerät das vergrößerte Zielelement von dem ersten Ort zu dem zweiten Ort bewegt, Bewegen des ersten Elements durch das Endgerät zu einem dritten Ort und Bewegen des vergrößerten Zielelements von dem ersten Ort zu dem zweiten Ort.

10. Verfahren nach einem der Ansprüche 1 bis 9, wobei eine Größe des Zielelements positiv mit einer Anzahl von Schichten um den zweiten Ort in der Mehrzahl von Elementen (310 - 313, 320 - 323, 324, 330 - 337) korreliert ist und die Größe des Zielelements positiv mit einem Bereich korreliert ist, der von der ersten Schicht abgedeckt wird.

11. Verfahren nach einem der Ansprüche 1 bis 10, wobei das Zielelement (502) ein Element in einem Ordner (501) ist und das Verfahren ferner Folgendes umfasst:
Empfangen, durch das Endgerät, eines zweiten Vorgangs für den Ordner; und
das Anzeigen, durch ein Endgerät, einer ersten Schnittstelle umfasst: Anzeigen, durch das Endgerät, der ersten Schnittstelle als Reaktion auf den zweiten Vorgang.

12. Verfahren nach einem der Ansprüche 1 bis 11, wobei das Zielelement (301) ein Anwendungssymbol, eine Karte (801, 1001), ein Widget, einen Ordner (501), einen Kartensatz, ein Bildsymbol oder ein Albumsymbol umfasst.

13. Endgerät, umfassend:
einen oder mehrere Prozessoren (110);
einen oder mehrere Speicher (121); und
ein Modul, auf dem eine Mehrzahl von Anwendungen installiert ist, wobei
der Speicher ein oder mehrere Programme speichert, und wenn das eine oder die mehreren Programme vom Prozessor ausgeführt werden, die elektronische Vorrichtung dazu befähigt ist, die folgenden Schritte auszuführen:
Anzeigen, durch ein Endgerät, einer ersten Schnittstelle, wobei die erste Schnittstelle eine Mehrzahl von Elementen (310 - 313, 320 - 323, 324, 330 - 337) umfasst;
Empfangen, durch das Endgerät, eines ersten Vorgangs für ein Zielelement (301) in der Mehrzahl von Elementen;
Bewegen, durch das Endgerät, des Zielelements von einem ersten Ort zu einem zweiten Ort als Reaktion auf den ersten Vorgang;
Verkleinern und/oder Vergrößern, durch das Endgerät, einer ersten Schicht von Elementen (310 - 313) um den zweiten Ort in der Mehrzahl von Elementen; und
Verkleinern und/oder Vergrößern, durch das Endgerät, einer zweiten Schicht von Elementen (320 - 324) zur Anzeige nach einer ersten Zeitschwelle, nachdem das Endgerät die erste Schicht von Elementen zur Anzeige verkleinert und/oder vergrößert hat;
wobei das Endgerät **dadurch gekennzeichnet ist, dass** ein Verkleinerungsverhältnis, um das die zweite Schicht von Elementen (320 - 324) zur Anzeige verkleinert wird, größer ist als ein Verkleinerungsverhältnis, um das die erste Schicht von Elementen (310 - 313) zur Anzeige verkleinert wird, und ein Vergrößerungsverhältnis, um das die zweite Schicht von Elementen zur Anzeige vergrößert wird, kleiner ist als ein Vergrößerungsverhältnis, um das die erste Schicht von Elementen zur Anzeige vergrößert wird.

14. Ein computerlesbares Speichermedium (121), umfassend
ein Computerprogramm, das, wenn es von einem Prozessor (110) ausgeführt wird, den Prozessor veranlasst, Operationen durchzuführen, die umfassen:
Anzeigen einer ersten Schnittstelle durch ein Endgerät, wobei die erste Schnittstelle eine Vielzahl von Elementen (310 - 313, 320 - 323, 324, 330 - 337) umfasst;
Empfangen eines ersten Vorgangs für ein Zielelement (301) aus der Vielzahl von Elementen durch das Endgerät;
Bewegen des Zielelements von einem ersten Ort zu einem zweiten Ort durch das Endgerät als Reaktion auf den ersten Vorgang;
Verkleinern und/oder Vergrößern einer ersten Ebene von Elementen (310 - 313) um den zweiten Ort herum in der Vielzahl von Elementen durch das Endgerät; und
Verkleinern und/oder Vergrößern einer zweiten Ebene von Elementen (320 - 324) zur Anzeige nach einem ersten Zeitschwellenwert, nachdem das Endgerät die erste Ebene von Elementen zur Anzeige verkleinert und/oder vergrößert hat;
wobei das computerlesbare Speichermedium **dadurch gekennzeichnet ist, dass** ein Verkleinerungsverhältnis, auf das die zweite Ebene von Elementen (320 - 324) zur Anzeige verkleinert wird, größer ist als ein Verkleinerungsverhältnis, auf das die erste Ebene von Elementen (310 - 313) zur Anzeige verkleinert wird, und ein Vergrößerungsverhältnis, auf das die zweite Ebene von Elementen zur Anzeige vergrößert wird, kleiner ist als ein Vergrößerungsverhältnis, auf das die erste Ebene von Elementen zur Anzeige vergrößert wird.

## Revendications

1. Procédé d'affichage d'interface, dans lequel le procédé comprend :
l'affichage, par un dispositif terminal, d'une première interface, dans laquelle la première interface comprend une pluralité d'éléments ;
la réception, par le dispositif terminal, d'une première opération pour un élément cible (301) parmi la pluralité d'éléments (310 - 313, 320 - 323, 324, 330 - 337) ;
le déplacement, par le dispositif terminal, de l'élément cible d'un premier emplacement vers un second emplacement en réponse à la première opération ;
la réduction d'échelle et/ou l'agrandissement, par le dispositif terminal, d'une première couche d'éléments (310 - 313) autour du second emplacement dans la pluralité d'éléments ; et
la réduction d'échelle et/ou l'agrandissement, par le dispositif terminal, d'une seconde couche d'éléments (320 - 324) pour affichage après un premier seuil de temps suivant la réduction d'échelle et/ou l'agrandissement de la première couche d'éléments par le dispositif terminal pour affichage ;
le procédé étant **caractérisé en ce qu'**une proportion de réduction d'échelle selon laquelle la seconde couche d'éléments (320 - 324) est réduite pour affichage est supérieure à une proportion de réduction d'échelle selon laquelle la première couche d'éléments (310 - 313) est réduite pour affichage, et une proportion d'agrandissement selon laquelle la seconde couche d'éléments est agrandie pour affichage est inférieure à une proportion d'agrandissement selon laquelle la première couche d'éléments est agrandie pour affichage.

2. Procédé selon la revendication 1, dans lequel le procédé comprend en outre :
la réduction d'échelle et/ou l'agrandissement, par le dispositif terminal, d'une Nième couche d'éléments (330 - 337) autour du second emplacement dans la pluralité d'éléments pour affichage, dans lequel la Nième couche d'éléments et la seconde couche d'éléments (320 - 324) sont tous des éléments centrés sur le second emplacement, la Nième couche d'éléments sont des éléments sur un côté extérieur de la seconde couche d'éléments, et N est supérieur à 2.

3. Procédé selon la revendication 2, dans lequel le procédé comprend en outre :
lorsqu'une Mième couche d'éléments comprend un élément dans une barre d'ancrage, la réduction d'échelle et/ou l'agrandissement, par le dispositif terminal, de l'élément dans la barre d'ancrage pour affichage, dans lequel M est inférieur ou égal à N.

4. Procédé selon la revendication 2 ou 3, dans lequel une proportion de réduction d'échelle selon laquelle la Nième couche d'éléments (330 - 337) est réduite pour affichage est supérieure à une proportion de réduction d'échelle selon laquelle la seconde couche d'éléments (320 - 324) est réduite pour affichage, et une proportion d'agrandissement selon laquelle la Nième couche d'éléments est agrandie pour affichage est inférieure à une proportion d'agrandissement selon laquelle la seconde couche d'éléments est agrandie pour affichage.

5. Procédé selon l'une quelconque des revendications 1 à 4, dans lequel la réduction et/ou l'agrandissement, par le dispositif terminal, d'une première couche d'éléments (310 - 313) autour du second emplacement dans la pluralité d'éléments (310 - 313, 320 - 323, 324, 330 - 337) pour l'affichage comprend :
la réduction, par le dispositif terminal, de la première couche d'éléments à un premier instant, et l'affichage de la première couche d'éléments réduite ;
l'agrandissement, par le dispositif terminal, de la première couche d'éléments réduite à un second instant, et l'affichage de la première couche d'éléments agrandie ; et
la réduction, par le dispositif terminal, de la première couche d'éléments agrandie à un troisième instant, et l'affichage de la première couche d'éléments.

6. Procédé selon la revendication 5, dans lequel une taille de la première couche d'éléments réduite (310 - 313) est inférieure à une taille de la première couche d'éléments, et une taille de la première couche d'éléments agrandie est supérieure à la taille de la première couche d'éléments.

7. Procédé selon la revendication 5 ou 6, dans lequel la réduction et/ou l'agrandissement, par le dispositif terminal, d'une première couche d'éléments (310 - 313) autour du second emplacement dans la pluralité d'éléments (310 - 313, 320 - 323, 324, 330 - 337) pour l'affichage comprend :
la réduction vers l'intérieur et/ou l'agrandissement vers l'extérieur, par le dispositif terminal, de la première couche d'éléments autour du second emplacement dans la pluralité d'éléments pour l'affichage en utilisant le second emplacement comme centre.

8. Procédé selon l'une quelconque des revendications 1 à 7, dans lequel le déplacement, par le dispositif terminal, de l'élément cible (301) d'un premier emplacement à un second emplacement en réponse à la première opération comprend :
en réponse à la première opération, la réduction, par le dispositif terminal, de l'élément cible, et l'affichage de l'élément cible réduit ;
si la première opération agit continuellement sur l'élément cible, l'agrandissement, par le dispositif terminal, de l'élément cible réduit, et l'affichage de l'élément cible agrandi ; et
le déplacement, par le dispositif terminal, de l'élément cible agrandi du premier emplacement vers le second emplacement.

9. Procédé selon la revendication 8, dans lequel le déplacement, par le dispositif terminal, de l'élément cible agrandi (301) du premier emplacement vers le second emplacement comprend :
lorsqu'il est déterminé qu'il existe un premier élément au second emplacement dans un processus au cours duquel le dispositif terminal déplace l'élément cible agrandi du premier emplacement vers le second emplacement, le déplacement, par le dispositif terminal, du premier élément vers un troisième emplacement, et le déplacement de l'élément cible agrandi du premier emplacement vers le second emplacement.

10. Procédé selon l'une quelconque des revendications 1 à 9, dans lequel une taille de l'élément cible est corrélée positivement avec une quantité de couches autour du second emplacement dans la pluralité d'éléments (310 - 313, 320 - 323, 324, 330 - 337), et la taille de l'élément cible est corrélée positivement avec une plage couverte par la première couche.

11. Procédé selon l'une quelconque des revendications 1 à 10, dans lequel l'élément cible (502) est un élément dans un dossier (501), et le procédé comprend en outre :
la réception, par le dispositif terminal, d'une seconde opération pour le dossier ; et
l'affichage, par un dispositif terminal, d'une première interface comprend : l'affichage, par le dispositif terminal, de la première interface en réponse à la seconde opération.

12. Procédé selon l'une quelconque des revendications 1 à 11, dans lequel l'élément cible (301) comprend une icône d'application, une carte (801, 1001), un widget, un dossier (501), un ensemble de cartes, une icône d'image ou une icône d'album.

13. Dispositif terminal, comprenant :
un ou plusieurs processeurs (110) ;
une ou plusieurs mémoires (121) ; et
un module sur lequel une pluralité d'applications sont installées, dans lequel
la mémoire stocke un ou plusieurs programmes, et lorsque les un ou plusieurs programmes sont exécutés par le processeur, le dispositif électronique est activé pour effectuer les étapes suivantes :
l'affichage, par un dispositif terminal, d'une première interface, dans laquelle la première interface comprend une pluralité d'éléments (310 - 313, 320 - 323, 324, 330 - 337) ;
la réception, par le dispositif terminal, d'une première opération pour un élément cible (301) dans la pluralité d'éléments ;
le déplacement, par le dispositif terminal, de l'élément cible d'un premier emplacement à un second emplacement en réponse à la première opération ;
la réduction et/ou l'agrandissement, par le dispositif terminal, d'une première couche d'éléments (310 - 313) autour du second emplacement dans la pluralité d'éléments ; et
la réduction et/ou l'agrandissement, par le dispositif terminal, d'une seconde couche d'éléments (320 - 324) pour l'affichage après un premier seuil de temps après que le dispositif terminal a réduit et/ou agrandi la première couche d'éléments pour l'affichage ;
le dispositif terminal **caractérisé en ce qu'**une proportion de réduction à laquelle la seconde couche d'éléments (320 - 324) est réduite pour l'affichage est supérieure à une proportion de réduction à laquelle la première couche d'éléments (310 - 313) est réduite pour l'affichage, et une proportion d'agrandissement à laquelle la seconde couche d'éléments est agrandie pour l'affichage est inférieure à une proportion d'agrandissement à laquelle la première couche d'éléments est agrandie pour l'affichage.

14. Support de stockage lisible par ordinateur (121), comprenant
un programme informatique qui, lorsqu'il est exécuté par un processeur (110), amène le processeur à effectuer des opérations comprenant :
l'affichage, par un dispositif terminal, d'une première interface, dans lequel la première interface comprend une pluralité d'éléments (310 - 313, 320 - 323, 324, 330 - 337) ;
la réception, par le dispositif terminal, d'une première opération pour un élément cible (301) parmi la pluralité d'éléments ;
le déplacement, par le dispositif terminal, de l'élément cible d'un premier emplacement à un second emplacement en réponse à la première opération ;
la réduction et/ou l'agrandissement, par le dispositif terminal, d'une première couche d'éléments (310 - 313) autour du second emplacement dans la pluralité d'éléments ; et
la réduction et/ou l'agrandissement, par le dispositif terminal, d'une seconde couche d'éléments (320 - 324) pour affichage après un premier seuil de temps après que le dispositif terminal a réduit et/ou agrandi la première couche d'éléments pour affichage ;
le support de stockage lisible par ordinateur **caractérisé en ce qu'**une proportion de réduction à laquelle la seconde couche d'éléments (320 - 324) est réduite pour affichage est supérieure à une proportion de réduction à laquelle la première couche d'éléments (310 - 313) est réduite pour affichage, et une proportion d'agrandissement à laquelle la seconde couche d'éléments est agrandie pour affichage est inférieure à une proportion d'agrandissement à laquelle la première couche d'éléments est agrandie pour affichage.
